# EUROPÄISCHE PATENTSCHRIFT

(11) **EP 0 860 455 B1**
(45) Veröffentlichungstag und Bekanntmachung des Hinweises auf die Patenterteilung: **04.06.2008**
(21) Anmeldenummer: 98810111.9
(22) Anmeldetag: 12.02.1998
(51) Int. Cl.: C08F 246/00, C09K 19/38

(54) **Photovernetzbare Polymere**
Photocrosslinkable polymers
Polymères photodurcissables

(30) Priorität: 24.02.1997 EP 97102973
(43) Veröffentlichungstag der Anmeldung: 26.08.1998
(73) Patentinhaber: Rolic AG, 6301 Zug (CH)
(72) Erfinder: Buchecker, Richard, 8008 Zürich (CH); Marck, Guy, 68440 Schlierbach (FR); Schuster, Andreas, 79110 Freiburg (DE); Seiberle, Hubert, 79576 Weil am Rhein (DE)
(74) Vertreter: Veenstra, Eva

(56) Entgegenhaltungen:
- EP-A- 0 611 786
- EP-A- 0 753 785

## Beschreibung

Die Erfindung betrifft neue vernetzbare, photoaktive Polymere sowie deren Verwendung als Orientierungsschichten für Flüssigkristalle und zum Aufbau unstrukturierter bzw. strukturierter optischer Elemente und Mehrschichtsysteme.

Der Orientierungsschicht kommt in (elektro-optischen) Flüssigkristallvorrichtungen eine besondere Bedeutung zu. Sie dient dazu eine gleichmässige und störungsfreie Ausrichtung der Moleküllängsachsen zu gewährleisten.

Zur Orientierung von Flüssigkristallmolekülen in Flüssigkristallanzeigen (LCD's) verwendet man üblicherweise uniaxial geriebene Polymerorientierungsschichten wie z.B. Polyimid. Die Reibrichtung gibt bei diesem Prozess die Orientierungsrichtung vor. Mit dem Reiben sind jedoch einige gravierende Nachteile verbunden, die die optische Qualität von Flüssigkristallanzeigen stark beeinflussen können. So wird durch das Reiben Staub erzeugt, der zu optischen Fehlstellen im Display führen kann. Gleichzeitig wird die Polymerschicht elektrostatisch aufgeladen, was beispielsweise bei Thin Film Transistor (TFT)-TN-LCD's die Zerstörung der darunterliegenden Dünnschichttransistoren zur Folge haben kann. Aus diesen Gründen ist die Ausbeute an optisch einwandfreien Displays bei der LCD-Produktion bisher nicht optimal.

Ein weiterer Nachteil des Reibens besteht darin, dass es nicht möglich ist, auf einfache Weise strukturierte Orientierungsschichten herzustellen, da die Orientierungsrichtung beim Reiben nicht lokal variiert werden kann. Durch Reiben können somit hauptsächlich grossflächig einheitlich ausgerichtete Schichten hergestellt werden. Strukturierte Orientierungsschichten sind jedoch in vielen Bereichen der Displaytechnologie und der integrierten Optik von grossem Interesse. Beispielsweise lässt sich damit die Blickwinkelabhängigkeit von Twisted Nematic (TN)-LCD's verbessern.

Seit einiger Zeit sind Orientierungsschichten bekannt, bei denen die Orientierungsrichtung durch Bestrahlung mit polarisiertem Licht vorgegeben werden kann. Dadurch können die dem Reiben inhärenten Probleme umgangen werden. Zusätzlich besteht die Möglichkeit, die Orientierungsrichtung gebietsweise unterschiedlich vorzugeben und damit die Orientierungsschicht zu strukturieren.

Eine Möglichkeit der strukturierten Orientierung von Flüssigkristallen nutzt die Isomerisierungsfähigkeit bestimmter Farbstoffmoleküle aus, um photochemisch durch Einstrahlung mit polarisiertem Licht geeigneter Wellenlänge eine Vorzugsrichtung zu induzieren. Dies wird beispielsweise dadurch erreicht, dass man einem Orientierungspolymer einen Farbstoff zumischt, der dann mit polarisiertem Licht bestrahlt wird. Ein solches Guest/Host-System ist zum Beispiel in US-A-4,974,941 beschrieben. Bei diesem System werden Azobenzole in Polyimidorientierungsschichten eingemischt und anschliessend mit polarisiertem Licht bestrahlt. Flüssigkristalle, die mit der Oberfläche einer so belichteten Schicht in Kontakt sind, werden entsprechend dieser Vorzugsrichtung orientiert. Dieser Orientierungsprozess ist reversibel, d.h. durch nochmaliges Bestrahlen der Schicht mit Licht einer zweiten Polarisationsrichtung lässt sich die bereits eingeschriebene Richtung der Orientierung wieder umdrehen. Da dieser Umorientierungsprozess beliebig oft wiederholt werden kann, sind Orientierungsschichten auf dieser Basis für den Einsatz in LCD's weniger geeignet.

Eine weitere Möglichkeit zur Erzeugung hochaufgelöster Orientierungsmuster in flüssigkristallinen Schichten ist in Jpn. J. Appl. Phys. Vol. 31 (1992), 2155 beschrieben. Bei diesem Verfahren wird die durch Bestrahlung mit linear polarisiertem Licht induzierte Dimerisierung polymergebundener photoreaktiver Zimtsäuregruppen zur strukturierten Orientierung von Flüssigkristallen benutzt. Im Gegensatz zu dem oben beschriebenen reversiblen Orientierungsverfahren, wird bei den in Jpn. J. Appl. Phys. Vol. 31 (1992), 2155 beschriebenen photostrukturierbaren Orientierungsschichten ein anisotropes Polymernetzwerk aufgebaut. Diese photoorientierten Polymernetzwerke sind überall dort einsetzbar,wo strukturierte oder unstrukturierte Flüssigkristallorientierungsschichten benötigt werden. Ausser in LCD's kann man solche Orientierungsschichten beispielsweise auch zur Herstellung von sogenannten Hybridschichten verwenden, wie dies in den europäischen Patentanmeldungen EP-A- 0 611 981, EP-A- 0 689 084, EP-A-0689 065, EP-A-0 753 785 exemplifiziert wird. Mit diesen Hybridschichten aus photostrukturierten Orientierungspolymeren und vernetzbaren nieder-molekularen Flüssigkristallen lassen sich optische Elemente wie etwa nichtabsorptive Farbfilter, Linear- und Zirkularpolarisatoren, optische Verzögerungsschichten, usw. verwirklichen.

In EP-A-611,786 sind Zimtsäurepolymere, die sich prinzipiell zum Aufbau von solchen anisotrop vernetzten, photostrukturierten Orientierungsschichten für Flüssigkristalle eignen, beschrieben. Diese vernetzbaren Zimtsäurederivate sind grundsätzlich über die Carboxylfunktion der Zimtsäure (Phenylacrylsäure) und einen Spacer an die Polymerhauptkette angeknüpft. Die bisher verwendeten Photopolymere dieses Typs zeigen jedoch eine Anzahl gravierender Nachteile. So wirken sich beispielsweise photochemische Konkurrenzreaktionen störend auf die Orientierungsfähigkeit aus. Zudem besitzen die bekannten Zimtsäurepolymere nur eine ungenügende photochemische Langzeitstabilität. Beispielsweise führt eine längere UV-Licht Bestrahlung einer vorgefertigten Orientierungsschicht zur Zerstörung der ursprünglich vorhandenen Orientierung. Mehrfach-Belichtungen, bei denen eine bereits bestehende Orientierungsschicht mit einem vorgegebenen eingeschriebenen Muster ein weiteres Mal belichtet wird, um die noch unbelichteten Bereiche in eine andere Richtung zu orientieren, können nur durchgeführt werden, wenn die zuvor belichteten Stellen durch eine Maske abgedeckt werden. Ansonsten können die bereits orientierten Bereiche der Schicht ihre Struktur durch photochemische Nebenreaktionen ganz oder teilweise wieder verlieren.

Ein weiterer Nachteil der bisher verwendeten Zimtsäurepolymere besteht darin, dass bei den durch eine einfache Belichtung mit polarisiertem Licht hergestellten Orientierungsoberflächen aus diesen Materialien kein Kippwinkel auftritt. Insbesondere für den Einsatz in LCD's muss aber neben der Orientierungsrichtung auch ein Kippwinkel durch die Orientierungsschicht vermittelt werden.

Bei den oben erwähnten uniaxial geriebenen Polymerorientierungsschichten wird dieser Kippwinkel bereits beim Reibprozess auf der Polymeroberfläche erzeugt. Bringt man einen Flüssigkristall in Kontakt mit einer solchen Oberfläche, so liegen die Flüssigkristallmoleküle nicht parallel sondern geneigt zur Oberfläche, der Kippwinkel wird also auf den Flüssigkristall übertragen. Die Grösse des Kippwinkels wird dabei sowohl durch Reibparameter wie etwa Vorschubgeschwindigkeit und Anpressdruck sowie durch die chemische Struktur des Polymers bestimmt. Für die Herstellung von Flüssigkristallanzeigen sind je nach Typ Kippwinkel zwischen 1° und 15° erforderlich. Die grösseren Kippwinkel werden insbesondere für Supertwisted Nematic (STN) LCD's benötigt, um das Entstehen von sogenannten Fingerprint-Texturen zu vermeiden. In TN- und TFT-TN-LCD's wird durch den Kippwinkel die Dreh- und die Kipprichtung definiert, wodurch "Reverse Twist"- und "Reverse Tilt "-Phänomene verhindert werden. Während Reverse Twist im ungeschalteten Zustand Gebiete mit falschem Drehsinn zur Folge hat, was sich optisch in fleckigem Aussehen der Anzeige bemerkbar macht, macht sich Reverse Tilt vor allem beim Schalten des LCD's durch Verkippen der Flüssigkristalle in unterschiedliche Richtungen optisch sehr störend bemerkbar. Reverse Twist lässt sich durch Dotieren der Flüssigkristallmischung mit einem chiralen Dotierstoff geeigneter Drehrichtung verhindern. Zur Unterdrückung von Reverse Tilt gibt es bisher jedoch keine alternative Möglichkeit zum Einsatz von Orientierungsschichten mit Kippwinkel.

Der Erfindung lag daher die Aufgabe zugrunde, photoreaktive Polymere herzustellen, die die oben geschilderten Nachteile der bisher verwendeten Zimtsäurepolymere d.h. die fehlende photochemische Langzeitstabilität und vor allem den fehlenden Tiltwinkel nach Bestrahlung mit polarisiertem Licht nicht aufweisen und damit zur Erzeugung stabiler hochaufgelöster Orientierungsmuster befähigt sind.

Überraschenderweise wurde nun gefunden, dass die aus EP-A- 611 786 bekannten Polymere, die über einen Spacer mit der Carboxyl-Gruppe (COO) oder der Carboxylamino-Gruppe (-CONR-) von 3-Arylacrylsäurederivaten als photoreaktiver Einheit verknüpft sind, wobei die Arylacrylsäurederivate 1-3 Ringe aufweisen können, zu Orientierungsschichten mit einem deutlich ausgeprägten Tiltwinkel führen, wenn mindestens ein Ring ein Phenylen-Rest ist, der mit mindestens einer Alkoxy- oder Fluoralkoxy-Gruppe ortho oder meta zu einer der Verknüpfungsstellen substituiert ist.

Gleichzeitig sind die Orientierungsschichten photochemisch stabiler und führen zu einer ausgezeichneten Orientierung der Flüssigkristalle, die sich beispielsweise in einem sehr guten Kontrast zeigt. Zudem kann die Belichtung mit linear polarisiertem Licht meist im vorteilhaften längerwelligen Bereich oder bei vorteilhaft kürzeren Belichtungszeiten durchgeführt werden.

Gegenstand der vorliegenden Erfindung sind Polymere der allgemeinen Formel I: 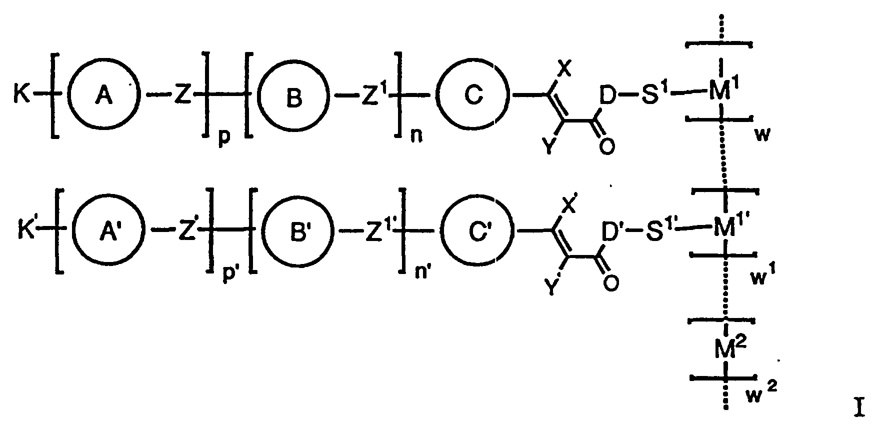 worin
- M¹,M^{1'}: eine wiederkehrende Monomereinheit aus der Gruppe: Acrylat, Methacrylat, 2-Chloracrylat, 2-Phenylacrylat; gegebenenfalls durch niederes Alkyl N-substituiertes Acrylamid, Methacrylamid, 2-Chloracrylamid und 2-Phenylacrylamid; Vinylether, Vinylester, Styrol-Derivate, Siloxane;
- M²: eine wiederkehrende Monomereinheit aus der Gruppe: Acrylat, Methacrylat, 2-Chloracrylat, 2-Phenylacrylat, gegebenenfalls durch niederes Alkyl N-substituiertes Acrylamid, Methacrylamid, 2-Chloraaylamid und 2-Phenylacrylamid; Vinylether, Vinylester; geradkettige oder verzweigte Alkylester der Acryl- bzw. Methacrylsäure, Allylester der Acrylbzw. Methacrylsäure, Alkylvinylether bzw. Ester, Phenoxyalkylacrylate bzw. Phenoxyalkylmethacrylate oder Hydroxyalkylacrylate bzw. Hydroxyalkylmethacrylate, Phenylalkylacrylate bzw. Phenylalkylmethacrylate, wobei die Alkylreste 1 bis 20, vorzugsweise 5 bis 20, insbesondere jedoch 5 bis 18 Kohlenstoffatome haben; Acrylnitril, Methacrylnitril, Styrol, 4-Methylstyrol oder Siloxane bedeutet;
- w, w¹, w²: Molenbrüche der Comonomeren mit 0< w ≤1, 0 ≤w¹<1 und 0≤w²≤ 0,5 sind;
- S¹, S^{1'}: unabhängig voneinander 1,4-Butylen, 1,5-Pentylen, 1,6-Hexylen, 1,7-heptylen, 1,8-Octylen, 1,9-Nonylen, 1,10-Decylen, 1,11-Undecylen, 1,12-Dodecylen, 1,3-Butylen, 3-Methyl-1,3-butylen, 3-Propylenoxy-6-hexylen, 3-Propylencarbamoyloxy-6-hexylen, 3-Propylencarbonyloxy-6-hexylen, 3-Propylenoxycarbonyl-6-hexylen, 3-Propylencarbonylamino-6-hexylen, Propylencarbamoylhexylen darstellen;
- D, D': unabhängig voneinander -O- oder -NR²-;
wobei R² Wasserstoff oder C₁₋₆ Alkyl bedeuten;
- X,X',Y,Y': unabhängig voneinander Wasserstoff, Fluor, Chlor, Cyano, gegebenenfalls mit Fluor substituiertes Alkyl mit 1 bis 12 Kohlenstoffatomen in der gegebenenfalls eine CH₂ Gruppe oder mehrere nicht benachbarte CH₂ Gruppen durch O, -COO-,-OOC-, und/oder -CH=CH- ersetzt sein können;
- A, A': unabhängig voneinander unsubstituiertes oder gegebenenfalls mit Fluor, Chlor, Cyano, Alkyl, Alkoxy oder Fluoralkoxy substituiertes Phenylen, Pyridin-2,5-diyl, Pyrimidin-2,5-diyl, 1,3-Dioxan-2,5-diyl, Cyclohexan-1,4-diyl, Piperidin-1,4-diyl, Piperazin-1,4-diyl;
- B, B': unabhängig voneinander unsubstituiertes oder gegebenenfalls mit Fluor, Chlor, Cyano, Alkyl, Alkoxy oder Fluoralkoxy substituiertes Phenylen, Pyridin-2,5-diyl, Pyrimidin-2,5-diyl, 1,4- bzw. 2,6-Naphthylen, 1,3-Dioxan-2,5-diyl, Cyclohexan-1,4-diyl;
- C, C': unabhängig voneinander unsubstituiertes oder gegebenenfalls mit Fluor, Chlor, Cyano, Alkyl, Alkoxy oder Fluoralkoxy substituiertes Phenylen, oder Pyrimidin-2,5-diyl, Pyridin-2,5-diyl, 2,5-Thiophenylen, 2,5-Furanylen, 1,4- oder 2,6-Naphthylen;
- K, K': unabhängig voneinander Wasserstoff, Fluor, Chlor, Cyano, Nitro oder eine gegebenenfalls mit Fluor, Chlor, Cyano oder Nitro substituierte geradkettige oder verzweigte Alkyl-, Alkoxy- Alkyl-COO-, Alkyl-CO-NR³ oder Alkyl-OCO-Gruppe mit 1 bis 20 Kohlenstoffatomen in der gegebenenfalls eine CH₂ Gruppe oder mehrere nicht benachbarte CH₂ Gruppen durch-O-, -CH=CH- oder -C≡C- ersetzt sein können und worin R³ Wasserstoff oder C₁₋₆ Alkyl;
mit der Massgabe, dass mindestens einer der Ringe A, B, C und/oder mindestens einer der Ringe A', B', C' einen Phenylenrest darstellt, welcher mit mindestens einer Alkoxy-Gruppe oder Fluoralkoxy-Gruppe ortho oder meta zu einer der Verknüpfungsstellen substituiert ist, wobei falls K Alkoxy oder Fluoralkoxy bedeutet, ein weiterer Alkoxy- oder Fluoralkoxy-Substituent vorhanden ist, der sich am selben Phenylenrest befindet wie der Rest K;
- Z, Z', Z¹, Z^{1'}: unabhängigvoneinander eine einfache Kovalenzbindung, -(CH₂)ₜ-, -O-, -CO-, -CO-O-, -O-OC-, -NR⁴-, -CO-NR⁴-, -R⁴N-CO-, -(CH₂)ᵤ-O-, -O-(CH₂)ᵤ-, -(CH₂)ᵤ-NR⁴- oder -NR⁴-(CH₂)ᵤ-;
wobei R⁴ Wasserstoff oder C₁₋₆ Alkyl bedeuten,
- t: eine ganze Zahl von 1 bis 4;
- u: eine ganze Zahl von 1 bis 3;
- p,p',n,n': unabhängig voneinander 0 oder 1;
bedeuten.

Gegenstand der vorliegenden Erfindung ist auch die Verwendung der erfindungsgemässen Polymere als Orientierungsschicht für Flüssigkristalle, sowie deren Verwendung in optischen Bauelementen, insbesondere zur Herstellung von Hybridschichtelementen.

Die erfindungsgemässen Polymere können einzeln oder in Gemischen zur Bildung von Orientierungsschichten verwendet werden.

Erfindungsgemässe Polymermaterialien sind:
a) Homopolymere mit wiederkehrenden Struktureinheiten der Formel I, worin w = 1, w¹ = 0 und w² = 0 ist.
b) Copolymere mit wiederkehrenden Struktureinheiten der Formel I, worin 0< w <1, 0< w¹ <1, w² = 0 ist.
c) Copolymere mit wiederkehrenden Struktureinheiten der Formel I worin 0< w <1, w¹ = 0, 0< w² ≤ 0.5 ist.

Bevorzugt sind die unter c) genannten Copolymere.

Insbesondere bevorzugt sind die unter a) genannten Homopolymere.

Die erfindungsgemässen Polymere haben ein Molekulargewicht M_{w} zwischen 1 000 und 5 000 000, vorzugsweise jedoch zwischen 5 000 und 2 000 000, besonders vorteilhaft jedoch zwischen 10 000 und 1 000 000.

Bei den erfindungsgemässen Copolymeren mit wiederkehrenden Struktureinheiten der Formel I, worin w¹ = 0 ist, ist der Anteil an Comonomereinheiten des unter Formel I definierten Restes M² kleiner oder gleich 50 %, vorzugsweise kleiner oder gleich 30 %, insbesondere jedoch kleiner oder gleich 15 %.

Unter dem Ausdruck "Copolymere" werden vorzugsweise statistische Copolymere verstanden.

Wiederkehrende Monomereinheiten (M¹) und (M^{1'}) sind beispielsweise
Acrylate wie 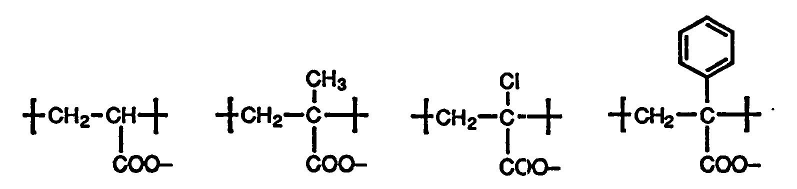
Acrylamide wie 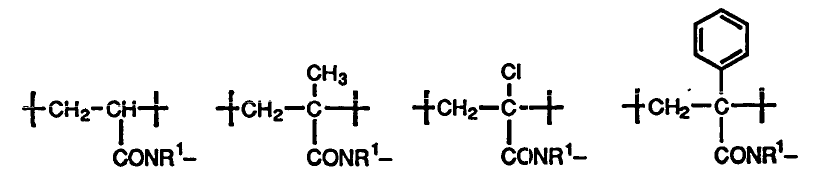
Vinylether und Vinylester wie 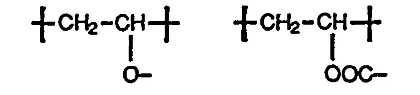
Styrolderivate wie 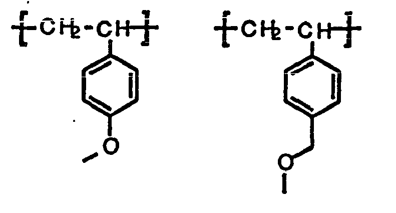
Siloxane wie 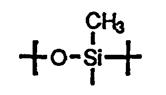
worin R¹ Wasserstoff oder niederes Alkyl bedeutet;
Bevorzugte "Monomereinheiten" M¹ sind Acrylat, Methacrylat, 2-Chloracrylat, Acrylamid, Methacrylamid, 2-Chloracrylamid, Styrol-Derivate und Siloxane.

Besonders bevorzugte "Monomereinheiten" M¹ sind Acrylat, Methacrylat, Styrol-Derivate und Siloxane.

Ganz besonders bevorzugte "Monomereinheiten" M¹ sind Acrylat, Methacrylat und Styrol-Derivate.

Wiederkehrende Monomereinheiten (M²) können ebenfalls die unter (M¹) aufgeführten Einheiten sein sowie zusätzlich Einheiten wie z.B. geradkettige oder verzweigte Alkylester, Phenylalkylester, Phenoxyalkylester, Hydroxyalkylester oder Allylester der Acryl-, bzw. Methacrylsäure wie 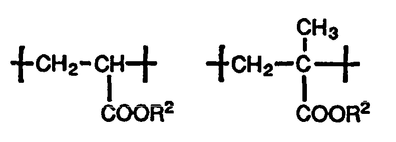 worin R² Alkyl, Allyl oder durch Phenyl, Phenoxy oder Hydroxy substituiertes Alkyl bedeutet.

Alkylvinylether bzw. Alkylvinylester 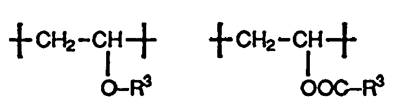 worin R³ Alkyl bedeutet.

Der Ausdruck "niederes Alkyl" für sich alleine genommen oder in Kombination wie "niederes Alkoxy", " Hydroxy- niederes Alkyl", " Phenoxyniederes Alkyl" bezeichnet geradkettige und verzweigte gesättigte Kohlenwasserstoffreste mit 1 bis 6, vorzugsweise mit 1 bis 3 Kohlenstoffatomen, wie Methyl, Ethyl, Propyl oder i-Propyl und dergleichen.

Der Ausdruck "Alkyl" für sich alleine genommen oder in Kombination wie "Alkoxy", bezeichnet geradkettige und verzweigte gesättigte Kohlenwasserstoffreste mit bis zu 20 Kohlenstoffatomen.

Der Ausdruck "Fluoralkoxy" bezeichnet einen Alkoxy-Rest wie oben definiert, worin die Kohlenwasserstoffreste ein-oder mehrfach mit Fluor substituiert sind. Beispiele für Fluoralkoxy-Gruppen sind: 1-Fluorpropoxy, 1-Fluorpentoxy, 2-Fluorpropoxy, 2,2-Difluorpropoxy, 3-Fluorpropoxy, 3,3-Difluorpropoxy, 3,3,3-Trifluorpropoxy.

Beispiele von "Spacereinheiten" sind 1,4-Butylen, 1,5-Pentylen, 1,6-Hexylen, 1,7-Heptylen, 1,8-Octylen, 1,9-Nonylen, 1,10-Decylen, 1,11-Undecylen, 1,12-Dodecylen, 1,3-Butylen, 3-Methyl-1,3-butylen, 3-Propylenoxy-6-hexylen, 3-Propylencarbamoyloxy-6-hexylen, 3-Propylencarbonyloxy-6-hexylen, 3-Propylenoxycarbonyl-6-hexylen, 3-Propylencarbonylamino-6-hexylen, Propylencarbamoylhexylen, und dergleichen.

Der Ausdruck "Phenylen" umfasst 1,2-, 1,3- oder 1,4-Phenylen. Bevorzugt ist 1,3- oder 1,4-Phenylen, insbesondere jedoch 1,4-Phenylen.

Essentiell ist, dass in den Verbindungen der Formel I mindestens ein Phenylen-Rest vorhanden ist, der mindestens eine Alkoxy- oder Fluoralkoxy-Gruppe trägt. Ist die Gruppe K eine Alkoxy-Gruppe oder Fluoralkoxy-Gruppe so muss mindestens ein weiterer Alkoxy- oder Fluoralkoxy-Substituent vorhanden sein, der sich am selben Phenylenrest befindet wie der Rest K.

Wie oben erläutert sind Copolymere mit wiederkehrenden Struktureinheiten der Formel I, worin w¹ = 0 ist bevorzugt und Homopolymere, mit wiederkehrenden Struktureinheiten der Formel I, worin w¹ = 0 und w² = 0 ist besonders bevorzugt. Die bevorzugten bzw. besonders bevorzugten Verbindungen der Formel I lassen sich nun weiterhin einteilen in
a) Verbindungen der Formel I mit drei Ringen A, B und C
b) Verbindungen der Formel I mit zwei Ringen B und C
c) Verbindungen der Formel I mit einem Ring C.

Davon wiederum sind Verbindungen der Formel I mit einem bzw. zwei Ringen bevorzugt. In bezug auf die vernetzbare Gruppe am aromatischen Ring C sindVerbindungen der Formel I, worin X und Y Wasserstoff und D Sauerstoff bedeutet, bevorzugt.

Bevorzugt sind somit Verbindungen der Formel I, worin M¹, M², S¹, K, die unter Formel I angegebene Bedeutung haben und worin
- D: Sauerstoff;
- X,Y: Wasserstoff;
- w: 0 < w < 1;
- w¹: 0;
- w²: 0 < w² < 0.5;
- p: 0;
- n: 0 oder 1;
- Z¹: eine einfache Kovalenzbindung, -CH₂CH₂-, -O-, -CH₂-O-, -O-CH₂-, -CO-O- oder -O-OC-;
- C: unsubstituiertes oder mit Alkoxy oder Fluoralkoxy substituiertes Phenylen, Pyridin-2,5-diyl oder Pyrimidin-2,5-diyl;
- B: unsubstituiertes oder mit Alkoxy oder Fluoralkoxy substituiertes Phenylen, Pyridin-2,5-diyl, Pyrimidin-2,5-diyl, Cyclohexan1,4-diyl oder Dioxan-1,5-diyl;
mit der Massgabe, dass mindestens einer der Ringe B oder C einen Phenylenrest darstellt, welcher mit mindestens einer Alkoxy-Gruppe oder Fluoralkoxy-Gruppe substituiert ist, wobei falls K Alkoxy oder Fluoralkoxy bedeutet, mindestens einer der Ringe B oder C einen Phenylenrest darstellt, welcher mit mindestens einer weiteren Alkoxy-Gruppe oder Fluoralkoxy-Gruppe substituiert ist;
bedeuten.

Bevorzugt sind auch homopolymere Verbindungen der Formel I, worin M¹, S¹, D, X, Y, K, Z¹, B, C, die oben angegebene Bedeutung haben und worin p = 0, n = 0 oder 1; w = 1, w¹, w² = 0 ist.

Besonders bevorzugt sind Verbindungen der Formel I, worin M¹, M², S¹, K die unter Formel I angegebene Bedeutung haben und worin
- D: Sauerstoff;
- X,Y: Wasserstoff;
- w: 0<w<1;
- w¹: 0;
- w²: 0 < w² < 0.5;
- p,: 0;
- n: 0 oder 1;
- B: unsubstituiertes oder mit Alkoxy oder Fluoralkoxy substituiertes Phenylen, oder Cyclohexan-1,4-diyl;
- C: unsubstituiertes oder mit Alkoxy oder Fluoralkoxy substituiertes Phenylen
mit der Massgabe, dass einer der vorhandenen Phenylenreste mit mindestens einer Alkoxy-Gruppe oder Fluoralkoxy-Gruppe substituiert ist, wobei, falls K Alkoxy oder Fluoralkoxy bedeutet, mindestens einer der vorhandenen Phenylenreste mit mindestens einer weiteren Alkoxy-Gruppe oder Fluoralkoxy-Gruppe substituiert ist;
bedeuten.

Besonders bevorzugt sind auch homopolymere Verbindungen der Formel I, worin M¹, S¹, D, X,Y, K, B und C die oben angegebene Bedeutung haben und p = 0, n = 0 oder 1, w = 1, w¹, w² = 0 ist.

Polymere der Formel I zeichnen sich dadurch aus, dass sie einfach zugänglich sind. Die Methoden zur Herstellung sind dem Fachmann an sich bekannt.

Die Polymeren der Formel I können prinzipiell nach zwei unterschiedlichen Verfahren hergestellt werden. Neben der direkten Polymerisation vorgefertigter Monomere besteht die Möglichkeit der polymeranalogen Umsetzung von reaktionsfähigen Zimtsäurederivaten mit funktionellen Polymeren.

Zur direkten Polymerisation werden die Monomere zunächst aus den einzelnen Bestandteilen, d.h. aus Vorläufern zu den Verbindungen der Formel I, den Spacern S¹ und den polymerisierbaren Teilen M zusammengesetzt. Die Bildung der Polymere erfolgt anschliessend in an sich bekannter Weise. Die Polymerisation kann beispielsweise in der Schmelze oder aber in Lösung unter Sauerstoffausschluss und in Anwesenheit eines Radikal-Initiators, der thermisch, photochemisch oder durch eine Redox-Reaktion Radikale generieren kann, erfolgen. Die Reaktion kann in einem Temperatur-Bereich von -10 °C bis 120°C, vorzugsweise in einem Bereich von 20 °C bis 100 °C erfolgen.

Zur Herstellung von Orientierungsschichten müssen die erfindungsgemässen Polymere zunächst auf einen Träger aufgebracht werden. Beispiele bekannter Trägermaterialien sind Aluminiumoxyd, Titanoxyd, Siliziumoxyd (Glas oder Quarz) oder Mischoxyde wie beispielsweise Indium-Zinnoxyd (ITO). Bei den erfindungsgemässen Anwendungen für optische oder elektro-optische Vorrichtungen stehen vor allem Glas oder gegebenenfalls ein mit einer Elektrode beschichteter Träger (z.B. mit Indium-Zinn-Oxid (ITO) beschichtete Glasplatte) als Trägermaterialien im Vordergrund. Für das Aufbringen werden die Polymere in einer Spin-Coating-Apparatur auf einen Träger aufgeschleudert, sodass homogene Schichten von 0,05-50 µm Dicke entstehen. Die Schichten können durch Bestrahlung mit linear polarisiertem Licht dimerisiert werden. Durch die räumlich selektive Bestrahlung der an den Träger gekoppelten Moleküleinheiten der Formel I können nun ganz bestimmte Bereiche einer Oberfläche ausgerichtet und durch die Dimerisierung gleichzeitig auch stabilisiert werden.

So können zur Herstellung von Orientierungsschichten in selektiv flächig begrenzten Bereichen die zu orientierenden Bereiche z.B. mit einer Quecksilber-Hochdruck-Lampe, einer Xenonlampe oder einem gepulsten UV-Laser unter Verwendung eines Polarisators und gegebenenfalls einer Maske zur Abbildung von Strukturen belichtet werden. Die Belichtungsdauer ist abhängig von der Leistung der einzelnen Lampen und kann von wenigen Sekunden bis zu einer Stunde variieren. Die Dimerisierung kann aber auch durch Bestrahlung der homogenen Schicht unter Verwendung von Filtern, die z.B. nur die für die Vernetzungsreaktion geeignete Strahlung hindurchlassen, erfolgen.

Die erfindungsgemässen Polymere werden durch die folgenden Beispiele weiter veranschaulicht. In den nachstehenden Beispielen bedeutet g die Anzahl der wiederkehrenden Enheiten, sodass sich Polymere mit einem Molekulargewicht M_{w} zwischen 1 000 und 5 000 000, vorzugsweise jedoch zwischen 5 000 und 2 000 000, besonders vorteilhaft jedoch zwischen 10 000 und 1 000 000 ergeben; w, w¹ und w² Molenbrüche der Comonomeren mit 0<w≤1, 0≤W¹<1 und 0≤w²≤0,5.

### Beispiel 1

### Poly [1-[6[3(E)-(3,4-Dimethoxyphenyl)acryloyloxy]hexyloxycarbonyl]-1-methylethylen]

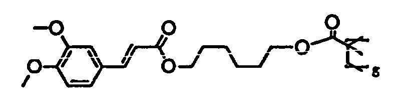

1.2 g (3.19 mmol) 2-Methylacrylsäure 6-[3(E)-(3,4-dimethoxyphenyl) acryloyloxy]hexylester und 5.2 mg (0,03 mmol) 2,2'-Azo-bis-isobutyronitril (AIBN) wurden in 5.2 ml Tetrahydrofuran (THF) gelöst. Die Lösung wurde 15 Minuten mit einem schwachen Argonstrom durchspült. Anschliessend wurde das Reaktionsgefäss luftdicht verschlossen und auf 60 °C erhitzt. Nach 24 Stunden wurde das Gefäss mit Luft begast, die Lösung mit 4 ml THF verdünnt und unter starkem Rühren bei Raumtemperatur in 800 ml Diethylether getropft. Das ausgefallene Polymer wurde abfiltriert und bei 60 °C im Wasserstrahlvakuum getrocknet. Zur weiteren Reinigung wurde das Polymer in 10 ml Dichlormethan gelöst und erneut in 800 ml Diethylether ausgefällt. Dieser Vorgang wurde solange wiederholt, bis dünnschicht chromatographisch kein Monomer mehr nachweisbar war. Filtrieren und Trocknen bei 60 °C im Vakuum ergaben 0.88g Poly [1-[6-[3(E)-(3,4-Dimethoxyphenyl)acryloyloxy]hexyloxycarbonyl]-1-methylethylen] als weisses Pulver mit einem Absorptionsmaximum von λ_{max.} (in CH₂Cl₂) = 322 nm (E(1%)=475).

Der als Ausgangsmaterial verwendete 2-Methylacrylsäure 6-[3(E)-(3,4-dimethoxyphenyl)acryloyloxy]hexylester wurde nach folgendem Verfahren hergestellt:

### 2-Methylacrylsäure 6-[3(E)-(3,4-dimethoxyphenyl)acryloyloxy]hexylester

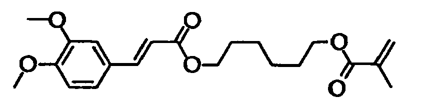

1.3 g (4.21 mmol) 3(E)-(3,4-Dimethoxyphenyl)acrylsäure 6-hydroxyhexylester wurden in 13 ml Tetrahydrofuran gelöst und nacheinander mit 1.0 ml (7.38 mmol) Triethylamin und 10 mg 2,6-Di-tert.-butyl-p-kresol (BHT) versetzt. Zu der auf ca. 0°C abgekühlten Lösung wurde innert 15 Minuten eine Lösung bestehend aus 0.61 ml (6.32 mmol) Methacrylsäurechlorid und 5 ml Tetrahydrofuran getropft und anschliessend während 2 Std. bei 0°C reagieren gelassen. Danach wurde das Reaktionsgemisch zwischen Diethylether und Wasser verteilt und die organische Phase mehrmals mit ges. Natriumchloridlösung gewaschen. Hierauf wurde die organische Phase über Magnesiumsulfat getrocknet, filtriert und eingedampft. Chromatographie des Rückstandes an 100 g Kieselgel mit Cyclohexan/Diethylether 1:1 ergab 1.2 g 2-Methylacrylsäure 6-[3(E)-(3,4-dimethoxyphenyl)acryloyloxy]hexylester.

### 3(E)-(3,4-Dimethoxyphenyl)acrylsäure 6-hydroxyhexylester

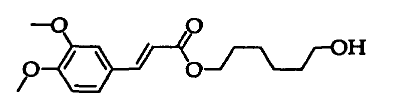

Zu einer Lösung von 1.0 g (E)-3,4-Dimethoxyzimtsäure in 10 ml Dimethylformamid wurde innert 10 Min. bei Raumtemperatur eine Lösung bestehend aus 0.72 ml 1,8-Diazabicyclo[5.4.0]undec-7-ene (1,5-5) und 5 ml Dimethylformamid getropft. Hierauf wurde das Reaktionsgemisch auf 80°C erhitzt, dann nacheinander 0.18 g Tetrabutylammoniumiodid und 0.71 ml 6-Chlor-1-hexanol zugefügt und anschliessend während 19 Std. reagieren gelassen. Danach wurde das Reaktionsgemisch auf Raumtemperatur abgekühlt, zwischen Diethylether und 1N Salzsäure verteilt und die organische Phase mehrmals mit ges. Natriumchloridlösung gewaschen. Hierauf wurde die organische Phase über Magnesiumsulfat getrocknet, filtriert und eingedampft. Chromatographie des Rückstandes an 150 g Kieselgel mit Toluol/Essigester 3:2 ergab 1.35 g 3(E)-(3,4-Dimethoxyphenyl)acrylsäure 6-hydroxyhexylester.

In analoger Weise lassen sich folgende Polymere synthetisieren:
Siehe Formel I mit p=0, n=0, X=H, Y=H, D=O, w=1, w¹=0 und w²=0

| K | C | S¹ | M¹ | λₘₐₓ. (CH₂Cl₂) |
|---|---|---|---|---|
| n-C₈H₁₇O | 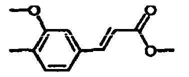 | (CH₂)₆ | 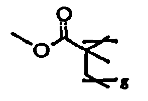 | |
| CF₃CH₂O | 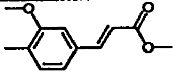 | (CH₂)₆ | 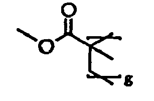 | |
| CH₃O | 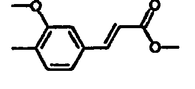 | (CH₂)₈ | 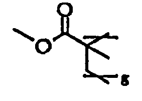 | |
| n-C₈H₁₇O | 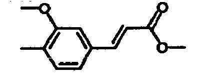 | (CH₂)₁₁ | 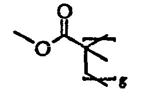 | |
| C₂H₅O | 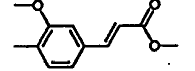 | (CH₂)₁₁ | 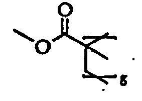 | |
| CF₃CH₂O | 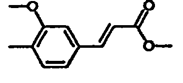 | (CH₂)₁₁ | 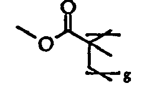 | |
| CH₃O | 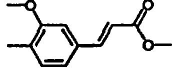 | (CH₂)₆ | 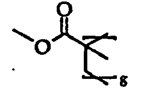 | |
| n-C₃F₇CH₂O | 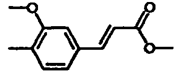 | (CH₂)₁₁ | 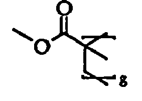 | |
| NO₂ | 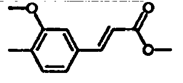 | (CH₂)₁₁ | 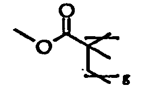 | |
| N02 | 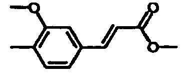 | (CH₂)₆ | 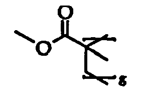 | |
| CH₃O | 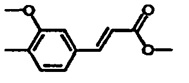 | (CH₂)₄ | 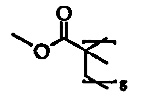 | |
| n-C₆H₁₃CO-NH | 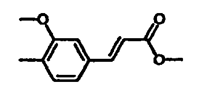 | (CH₂)₆ | 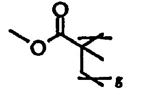 | |
| n-C₈H₁₇O | 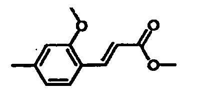 | (CH₂)₁₁ | 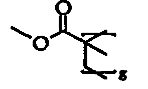 | |
| C₂H₅O | 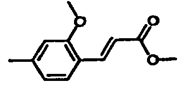 | (CH₂)₁₁ | 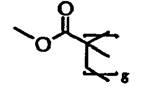 | |
| CF₃CH₂O | 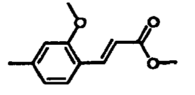 | (CH₂)₁₁ | 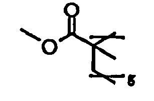 | |
| CH₃O | 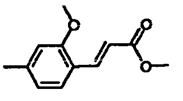 | (CH₂)₁₂ | 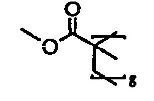 | |
| C₃F₇CH₂O | 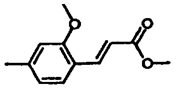 | (CH₂)₁₁ | 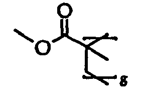 | |
| NO₂ | 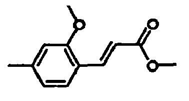 | (CH₂)₁₁ | 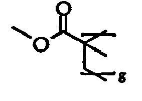 | |
| NO₂ | 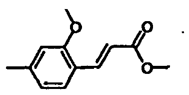 | (CH₂)₆ | 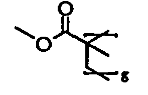 | |
| CH₃O | 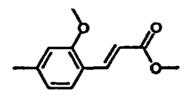 | (CH₂)₆O-CO-N-(CH₂) | 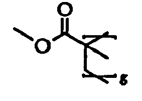 | |
| H | 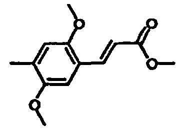 | (CH₂)₁₁ | 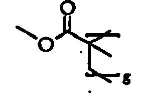 | |
| H | 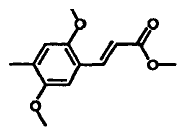 | (CH₂)₆ | 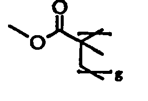 | 277 nm |
| | | | | 350 nm |
| H | 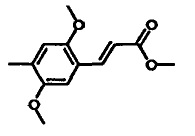 | (CH₂)₆O-CON(CH₂)₂ | 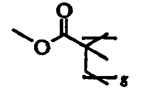 | |
| CH₃O | 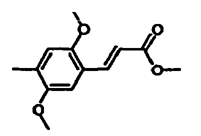 | (CH₂)₆ | 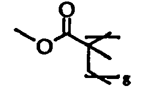 | |
| CH₃O | 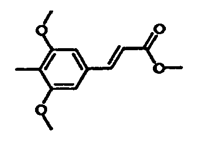 | (CH₂)₆ | 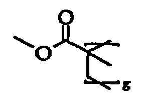 | |
| H | 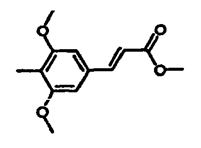 | (CH₂)₁₁ | 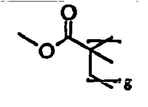 | |

### Beispiel 2

### Poly [1-[11-[3(E)-(3,4-Diethoxyphenyl)acryloyloxy]undecyloxycarbonyl]-1-methylethylen]

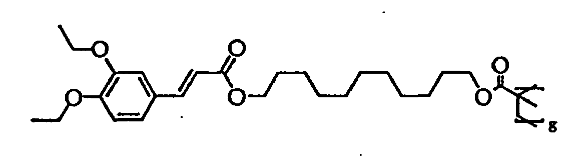

Die Darstellung erfolgt analog Beispiel 1 aus 1.0 g (2.14 mmol) 2-Methyl acrylsäure 11-[3(E)-(3,4-diethoxyphenyl)acryloyloxy]undecylester und 3.5 mg (0.02 mmol) 2,2'-Azo-bis-isobutyronitril (AIBN) ergibt Poly [1-[11[3(E)-(3,4-Diethoxyphenyl)acryloyloxy]undecyloxycarbonyl]-1-methylethylen].

Der als Ausgangsmaterial verwendete 2-Methylacrylsäure 11-[3(E)-(3,4-diethoxyphenyl)acryloyloxy]undecylester wurde nach folgendem Verfahren hergestellt:

### 3(E)-(3,4-Diethoxyphenyl)acrylsäure methylester

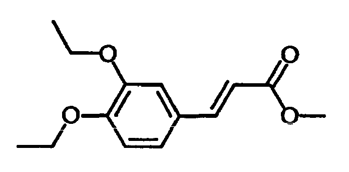

Zur eine Lösung von 1.0 g (5.15 mmol) 3,4-Diethoxybenzaldeyd und 10 ml Toluol werden 1.81 g (5.40 mmol) (Triphenylphosphoranyliden)acrylsäure methylester, bei Raumtemperatur, zugegeben. Dann wird 1 Std. bei Raumtemperatur,reagieren gelassen, die Reaktionssuspension über ein Kieselgel Polster klarfiltriert und das Filtrat eingedampft. Chromatographie des Rückstandes an Kieselgel mit Toluol/Essigester ergibt 3(E)-(3,4-Diethoxyphenyl)acrylsäure methylester.

### 3(E)-(3,4-Diethoxyphenyl)acrylsäure

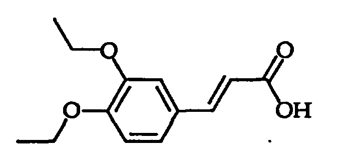

1.0 g (4.00 mmol) 3(E)-(3,4-Diethoxyphenyl)acrylsäure methylester wird in 30 ml 10 % iger Kaliumhydroxidlösung in Methanol suspendiert. Danach werden 2 ml Wasser zugegeben und während 3 Std auf 70°C erhitzt. Dann wird das Reaktionsgemisch abgekühlt und zwischen Diethylether und Wasser verteilt, die organische Phase mehrmals mit ges. Natriumchloridlösung gewaschen die vereinigten wässrigen Phasen mit einer 25 % igen Salzsäurelösung auf pH=4 eingestellt und mehrmals mit Methylenchlorid extrahiert. Die Methylenchloridphasen werden vereinigt, über Magnesiumsulfat getrocknet, filtriert und eingedampft. Dies ergibt 3(E)-(3,4-Diethoxyphenyl)acrylsäure.

### 3(E)-(3,4-Diethoxyphenyl)acrylsäure 11-hydroxyundecylester

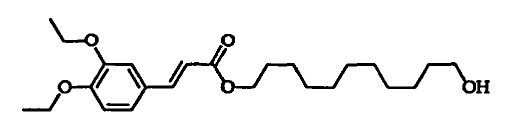

Die Darstellung erfolgt analog Beispiel 1 aus 0.94 g (4.00 mmol) 3(E)-(3,4-Diethoxyphenyl)acrylsäure und 1.10 g (4.40 mmol) 11-brom-1-undecanol und ergibt, nach Chromatographie an Kieselgel mit Toluol/Essigester, 3(E)-(3,4-Diethoxyphenyl) acrylsäure 11-hydroxyundecylester.

### 2-Methyl acrylsäure 11-[3(E)-(3,4-diethoxyphenyl)acryloyloxy]undecylester

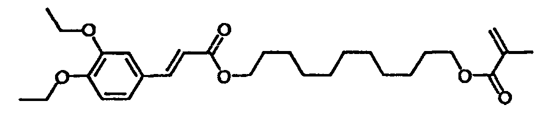

Die Darstellung erfolgt analog Beispiel 1 aus 1.56 g (4.00 mmol) 3(E)-(3,4-Diethoxyphenyl)acrylsäure 11-hydroxyundecylester, 0.42 ml (4.40 mmol) Methacrylsäure chlorid und 0.66 ml (4.80 mmol) Triethylamin und ergibt 2-Methylacrylsäure 11-[3(E)-(3,4-diethoxyphenyl)acryloyloxy]undecylester.

In analoger Weise lassen sich folgende Polymere synthetisieren:
Siehe Formel I mit p=0, n=0 oder 1, X=H, Y=H, D=O, w=1, w¹=0, w²=0.

| K | B | Z¹ | C | S¹ | M¹ | λₘₐₓ. (CH₂Cl₂) |
|---|---|---|---|---|---|---|
| C₂H₅O | | | 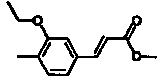 | (CH₂)₆ | 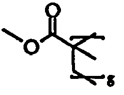 | |
| C₂H₅O | | | 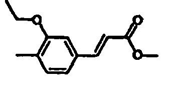 | (CH₂)₄ | 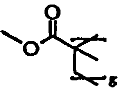 | |
| C₂H₅O | | | 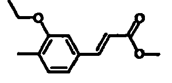 | (CH₂)₅ | 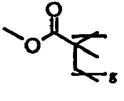 | |
| C₂H₅O | | | 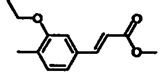 | (CH₂)₇ | 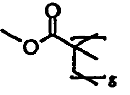 | |
| C₂H₅O | | | 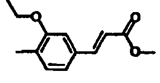 | (CH₂)₈ | 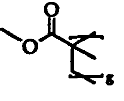 | |
| C₂H₅O | | | 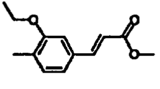 | (CH₂)₉ | 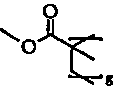 | |
| C₂H₅O | | | 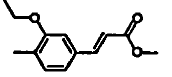 | (CH₂)₁₂ | 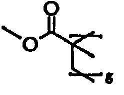 | |
| C₂H₅O | | | 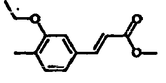 | (CH₂)₆O-(CH₂)₃ | 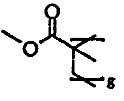 | |
| C₂H₅O | | | 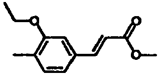 | (CH₂)₆O-CON(CH₂)₃ | 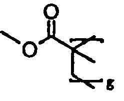 | |
| C₂H₅O | | | 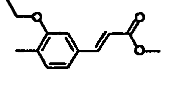 | (CH₂)₃O-CO-(CH₂)₃ | 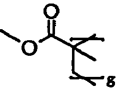 | |
| C₂H₅O | | | 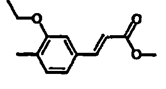 | (CH₂)₁₁O-(CH₂)₁₁ | 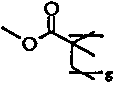 | |
| C₂H₅O | | | 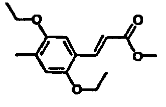 | (CH₂)₁₁ | 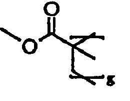 | |
| C₂H₅O | | | 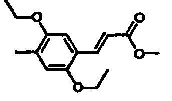 | (CH₂)₆ | 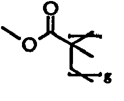 | |
| C₂H₅O | | | 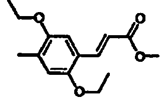 | (CH₂)₉ | 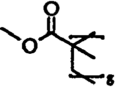 | |
| CH₃O | | | 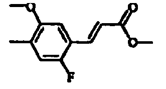 | (CH₂)₆ | 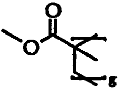 | |
| CH₃O | | | 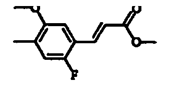 | (CH₂)₈ | 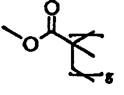 | |
| n-C₈H₁₇O | | | 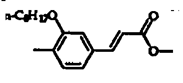 | (CH₂)₁₁ | 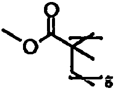 | |
| n-C₈H₁₇O | | | 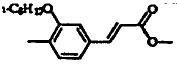 | (CH₂)₅ | 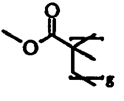 | |
| n-C₁₀H₂₁C | | | 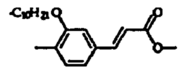 | (CH₂)₆ | 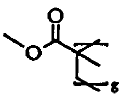 | |
| F | 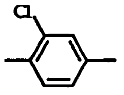 | N-CO | 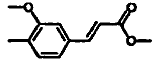 | (CH₂)₄ | 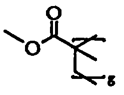 | |
| F | 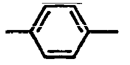 | CH₂O | 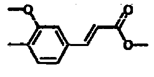 | (CH₂)₇ | 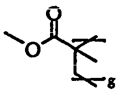 | |

### Beispiel 3

### Poly [1-[8[3(E)-(4-ethoxy-3-propoxyphenyl)acryloyloxy]octyloxycarbonyl]-1-methylethylen]

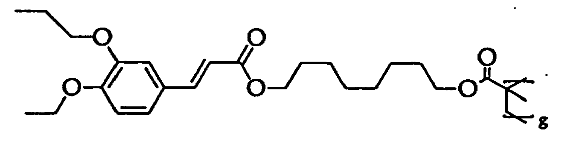

Die Darstellung erfolgt analog Beispiel 1 aus 1.0 g (2.24 mmol) 2-Methylacrylsäure 8{3(E)-[4-ethoxy-3-propoxyphenyl]acryloyloxy}octylester und 3.9 mg (0.02 mmol) 2,2'-Azo-bis-isobutyronitril (AIBN) und ergibt Poly [1-[8[3(E)-(4-ethoxy-3-propoxyphenyl)acryloyloxy]octyloxycarbonyl]-1-methylethylen].

Der als Ausgangsmaterial verwendete 2-Methylacrylsäure 8[3(E)-[4-ethoxy-3-propoxyphenyl]acryloyloxy]octylester wurde nach folgendem Verfahren hergestellt:

### 4-Benzyloxy-3-hydroxybenzaldehyd

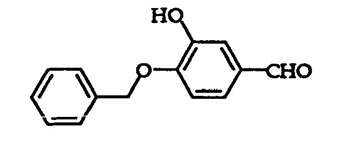

Ein Gemisch von 5.52 g (40 mmol) 3,4-Dihydroxybenzaldehyd, 6.09 g (44 mmol) Kaliumcarbonat, 70 mg Kaliumiodid, 110 ml Aceton und 6.84 g (40 mmol) Benzylbromid wurde während 15 Std. am Rückfluss erhitzt. Dann wurde abgekühlt, die Reaktionssuspension wurde filtriert und das Filtrat eingedampft. Chromatographie des Rückstandes an Kieselgel mit Toluol/Essigester 9:1 ergab 3.6 g 4-Benzyloxy-3-hydroxybenzaldehyd.

### 4-Benzyloxy-3-propoxybenzaldehyd

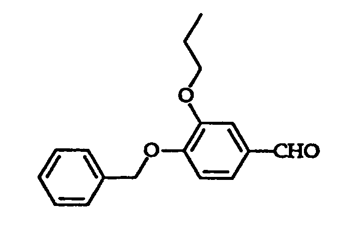

Zu eine Lösung von 2.73 g (12.0 mmol) 4-Benzyloxy-3-hydroxy benzaldehyd in 18 ml Dimethylsulfoxyd (DMSO) wurden 2.15 g (15.6 mmol) Kaliumcarbonat, 0.20 g (1.22 mmol) Kaliumiodid und 1.20 ml (13.2 mmol) n-Propylbromid gegeben, während 24 Std. bei 60°C reagieren gelassen. Danach wurde das Reaktionsgemisch auf Raumtemperatur abgekühlt, zwischen Essigester und Wasser verteilt, die organische Phase mehrmals mit ges. Natriumchloridlösung gewaschen., über Magnesiumsulfat getrocknet, filtriert und eingedampft. Chromatographie des Rückstandes an 50 g Kieselgel mit Toluol ergab 2.90 g 4-Benzyloxy-3-propoxybenzaldehyd.

### 2-(4-Benzyloxy-3-propoxyphenyl)-5,5-dimethyl-(1,3)-dioxan

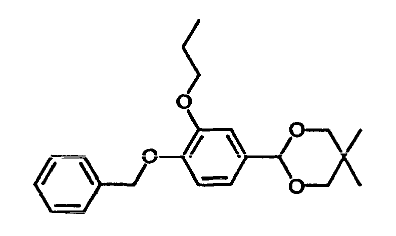

Zu eine Lösung von 1.25 g (4.63 mmol) 4-Benzyloxy-3-propoxy benzaldehyd in 50 ml Toluol wurden 1.45 g (13. 9 mmol) Neopentylglykol und 88 mg (0.46 mmol) p-Toluolsulfonsäure-monohydrat gegeben und dann während 1 Std. am Rückfluss, unter ein Wasserabscheidung, erhitzt. Danach wurde das Reaktionsgemisch auf Raumtemperatur abgekühlt, zwischen Toluol und einer ges. Natriumbicarbonatlösung verteilt, die organische Phase mehrmals mit Wasser gewaschen, über Magnesiumsulfat getrocknet, filtriert und eingedampft. Kristallisation des Rückstandes aus 10 ml Diethylether ergab 1.07g 2-(4-Benzyloxy-3-propoxyphenyl)-5,5-dimethyl-(1,3)-dioxan

### 4-(5,5-dimethyl-(1,3)-dioxan-2-yl)-2-propoxyphenol

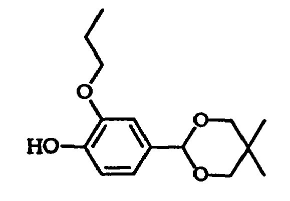

Eine Gemisch von 1.07 g (3.00 mmol) 2-(4-Benzyloxy-3-propoxyphenyl)-5,5-dimethyl-(1,3)-dioxan, 15 ml Tetrahydrofuran, 107 mg 10% Palladium/C Hydrierkatalysator wurde bei Raumtemperatur hydriert. Nach Aufnahme von 62,4 ml Wasserstoff wurde die Reaktionssuspension durch Dicalite filtriert und eingedampft. Chromatographie des Rückstandes an 25 g Kieselgel mit Toluol/Essigester 19:1 ergab 790 mg 4-(5,5-dimethyl-(1,3)-dioxan-2-yl)-2-propoxyphenol.

### 4-Hydroxy-3-propoxybenzaldehyd

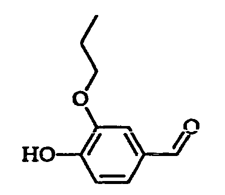

Ein Gemisch von 1.26 g (4.74 mmol) 4-(5,5-dimethyl-(1,3)-dioxan-2-yl)-2-propoxyphenol, 20 ml Toluol und 20 ml Ameisensäure wurde während 2 Std., bei Raumtemperatur, kräftig gerührt. Danach wurde das Reaktionsgemisch zwischen Toluol und Wasser verteilt, die organische Phase mehrmals mit Wasser gewaschen, über Magnesiumsulfat getrocknet, filtriert und eingedampft. Kristallisation des Rückstandes aus einem Gemisch von 10 ml Diethylether und 20 ml Hexan ergab 0.78 mg 4-Hydroxy-3-propoxybenzaldehyd.

### 3(E)-[4-Hydroxy-3-propoxyphenyl]acrylsäure methylester

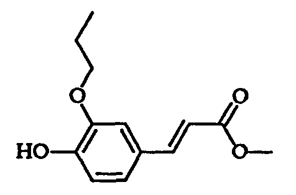

Die Darstellung erfolgt analog Beispiel 2 aus 0.76 g (4.22 mmol) 4-Hydroxy-3-propoxybenzaldehyd und 1.48 g (4.43 mmol) (Triphenylphosphoranylidene)acrylsäure methylester und ergab 0.78 g (E)-4-Hydroxy-3-propoxyzimtsäure methylester.

### 3(E)-[4-Ethoxy-3-propoxyphenyl]acrylsäure methylester

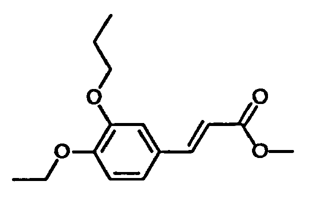

Zu einem Gemisch von 780 mg (3.30 mmol) (E)-4-Hydroxy-3-propoxyzimtsäure methylester und 10 ml 2-Butanon werden 0.49 ml (6.60 mmol) Ethylbromid und 1.37 g (9.9 mmol) Kaliumcarbonat gegeben und dann während 2 Std. am Rückfluss erhitzt. Danach wird das Reaktionsgemisch auf Raumtemperatur abgekühlt, zwischen Essigester und Wasser verteilt, die organische Phase mehrmals mit Wasser gewaschen, über Magnesiumsulfat getrocknet, filtriert und eingedampft. Chromatographie des Rückstandes an Kieselgel mit Cyclohexan/Essigester 9:1 ergibt 3(E)-[4-Ethoxy-3-propoxyphenyl]acrylsäure methylester.

### 3(E)-[4-Ethoxy-3-propoxyphenyl]acrylsäure

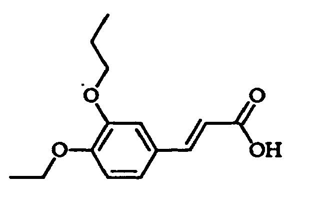

1.0 g (3.78 mmol) 3(E)-[4-Ethoxy-3-propoxyphenyl]acrylsäure methylester werden in 50 ml 10 % iger Kaliumhydroxid-lösung in Methanol suspendiert. Danach werden 2 ml Wasser zugegeben, während 3 Std. auf 70°C erhitzt und dann abgekühlt. Hierauf wird das Reaktionsgemisch zwischen Diethylether und Wasser verteilt, die organische Phase mehrmals mit ges. Natriumchloridlösung gewaschen, die vereinigten wässrigen Phasen werden mit einer 25 % igen Salzsäurelösung auf pH=4 eingestellt und mehrmals mit Methylenchlorid extrahiert. Dann werden die Methylenchloridphasen vereinigt, über Magnesiumsulfat getrocknet, filtriert und eingedampft. Dies ergibt 3(E)-[4-Ethoxy-3-propoxyphenyl]acrylsäure.

### 3(E)-[4-Ethoxy-3-propoxyphenyl]acrylsäure 8-hydroxyoctylester

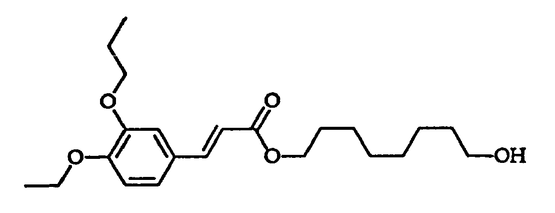

Die Darstellung erfolgt analog Beispiel 1 aus 1.0 g (4.00 mmol) 3(E)-[4-Ethoxy-3-propoxyphenyl]acrylsäure und 0.92 g (4.39 mmol) 8-Brom-1-hexanol und ergibt, nach Chromatographie an 150 g Kieselgel mit Toluol/Essigester 3(E)-[4-Ethoxy-3-propoxyphenyl]acrylsäure 8-hydroxyoctylester.

### 2-Methyl acrylsäure 8-[3(E)-(4-ethoxy-3-propoxyphenyl)acryloyloxy]octylester

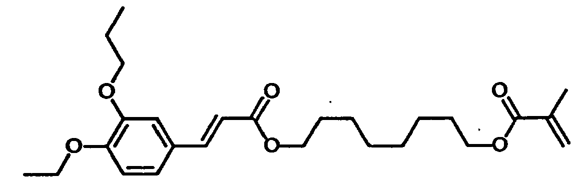

Die Darstellung erfolgt analog Beispiel 1 aus 1. 0 g (2.64 mmol) 3(E)-[4-Ethoxy-3-propoxyphenyl]acrylsäure 8-hydroxyoctylester, 0.28 ml (2.90 mmol) Methacrylsäure chlorid und 0.48 ml (3.42 mmol) Triethylamin und ergibt 2-Methylacrylsäure 6-[3(E)-(4-ethoxy-3-propoxyphenyl)acryloyloxy]hexylester.

In analoger Weise lassen sich folgende Polymere synthetisieren:
Siehe Formel I mit p=0, n=0, X=H, Y=H, D=O, w¹=0 und w²=0

| K | C | S¹ | M¹ | λₘₐₓ. (CH₂Cl₂) |
|---|---|---|---|---|
| C₂H₅O | 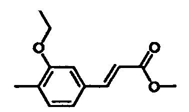 | (CH₂)₅ | 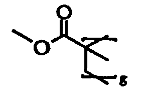 | |
| C₂H₅O | 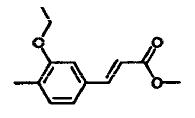 | (CH₂)₆ | 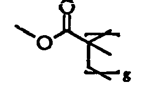 | |
| C₂H₅O | 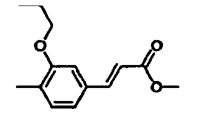 | (CH₂)₇ | 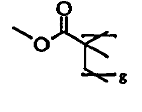 | |
| C₂H₅O | 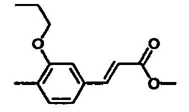 | (CH₂)₈ | 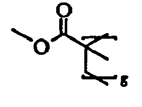 | |
| C₂H₅O | 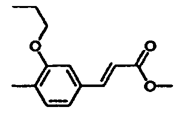 | (CH₂)₉ | 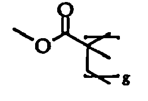 | |
| C₂H₅O | 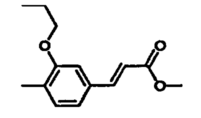 | (CH₂)₁₁ | 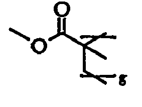 | |
| C₂H₅O | 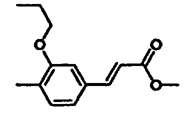 | (CH₂)₁₂ | 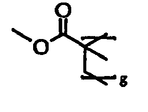 | |
| C₂H₅O | 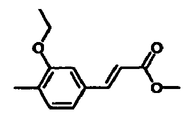 | (CH₂)₄ | 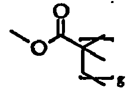 | |
| C₂H₅O | 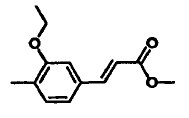 | (CH₂)₆O-CON(CH₂)₂ | 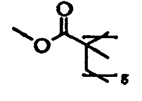 | |
| C₂H₅O | 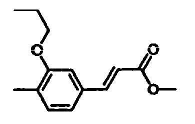 | (CH₂)₆O-(CH₂)₂ | 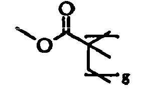 | |
| n-C₆H₁₃O | 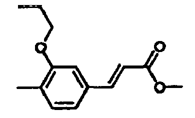 | (CH₂)₆ | 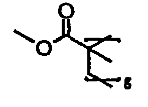 | |
| n-C₆H₁₃O | 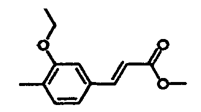 | (CH₂)₆O-(CH₂)₂ | 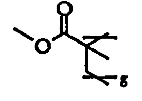 | |
| i-C₃H₇O | 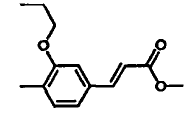 | (CH₂)₈ | 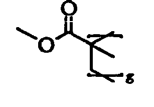 | |
| i-C₃H₇O | 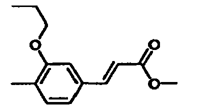 | (CH₂)₆ | 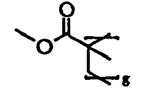 | |
| i-C₃H₇O | 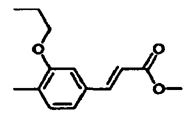 | (CH₂)₁₁ | 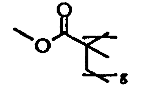 | |
| n-C₃F₇(CH₂)O | 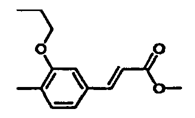 | (CH₂)₈ | 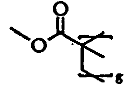 | |
| n-C₃F₇(CH₂)O | 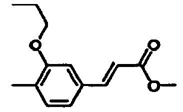 | (CH₂)₆ | 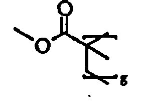 | |
| n-C₃F₇(CH₂)₂O | 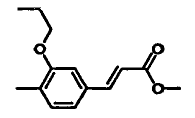 | (CH₂)₁₁ | 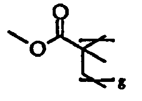 | |
| n-C₃H₇O | 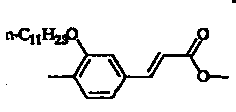 | (CH₂)₆ | 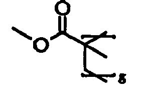 | |
| CH₃O | 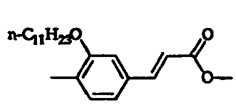 | (CH₂)₁₁ | 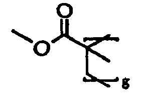 | |
| n-C₅H₁₁O | 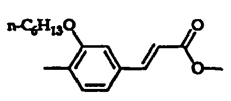 | (CH₂)₈ | 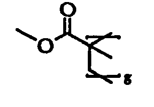 | |
| n-C₅H₁₁O | 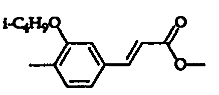 | (CH₂)₁₁ | 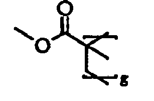 | |
| n-C₈H₁₇O | 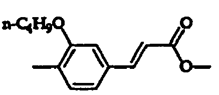 | (CH₂)₁₁ | 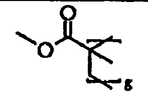 | |
| n-C₃H₇O | 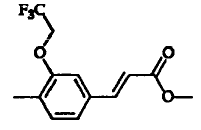 | (CH₂)₆ | 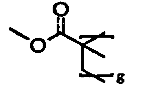 | |
| n-C₄H₉O | 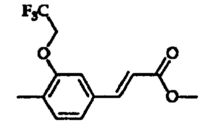 | (CH₂)₁₁ | 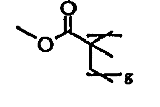 | |
| n-C₃F₇(CH₂)₂O | 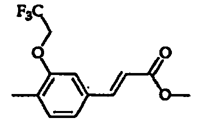 | (CH₂)₆ | 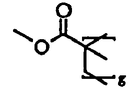 | |
| C₂H₅O | 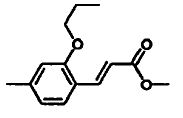 | (CH₂)₅ | 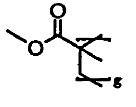 | |
| C₂H₅O | 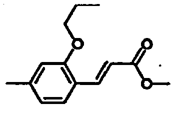 | (CH₂)₆ | 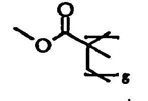 | |
| n-C₃H₇O | 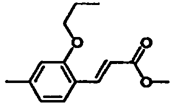 | (CH₂)₇ | 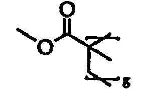 | |
| i-C₃H₇O | 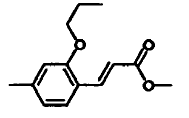 | (CH₂)₈ | 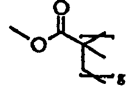 | |
| n-C₁₁H₂₃O | 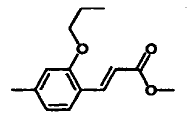 | (CH₂)₉ | 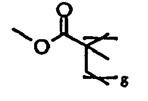 | |
| C₂H₅O | 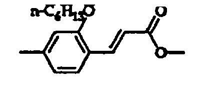 | (CH₂)₁₁ | 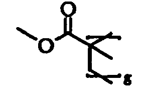 | |
| C₂H₅O | 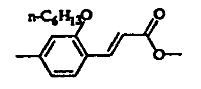 | (CH₂)₁₂ | 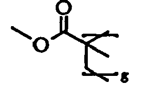 | |
| i-C₄H₉O | 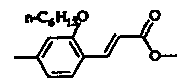 | (CH₂)₆ | 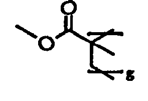 | |
| C₂H₅O | 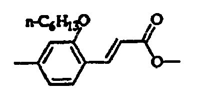 | (CH₂)₆O-CON(CH₂)₂ | 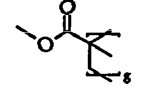 | |
| C₂H₅O | 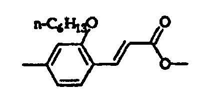 | (CH₂)₆O-(CH₂)₂ | 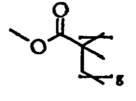 | |
| t-C₄H₉O | 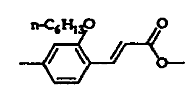 | (CH₂)₆ | 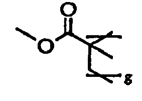 | |
| n-C₆H₁₃O | 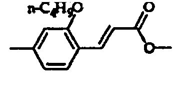 | (CH₂)₄ | 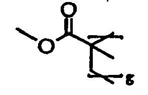 | |
| n-C₁₁H₂₃O | 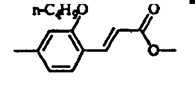 | (CH₂)₄ | 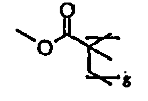 | |
| n-C₇H₁₅O | 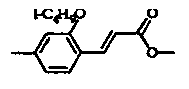 | (CH₂)₆ | 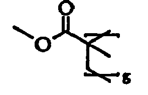 | |
| n-C₃F₇(CH₂)₂O | 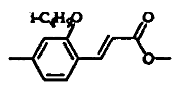 | (CH₂)₆ | 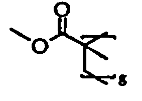 | |
| n-C₃F₇(CH₂)₂O | 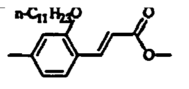 | (CH₂)₁₁ | 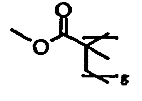 | |
| n-C₃F₇(CH₂)₂O | 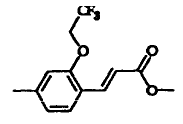 | (CH₂)₅ | 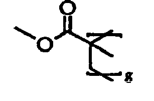 | |
| CH₃O | 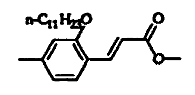 | (CH₂)₁₁ | 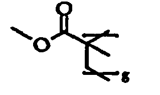 | |
| CH₃O | 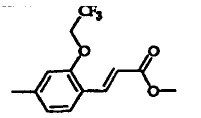 | (CH₂)₅ | 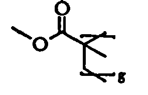 | |
| n-C₄H₉O | 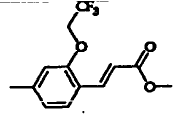 | (CH₂)₆ | 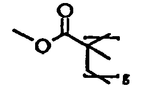 | |
| n-C₁₁H₂₃O | 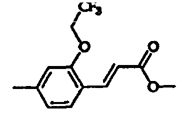 | (CH₂)₁₁ | 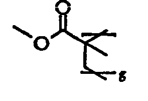 | |
| n-C₅H₁₁O | 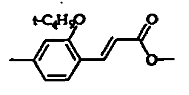 | (CH₂)₇ | 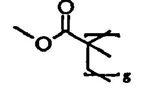 | |
| n-C₅H₁₁O | 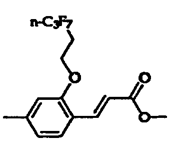 | (CH₂)₉ | 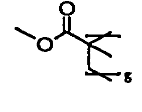 | |
| C₂H₅O | 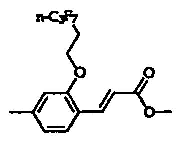 | (CH₂)₆ | 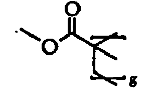 | |

### Beispiel 4

### Poly{1-[6-[3-[3-methoxy-4-(4-trans-pentylcyclohexylmethoxy)phenyl]acryloyloxy]hexyloxycarbo nyl]-1-methylethylen}

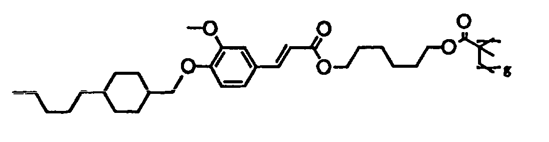

Die Darstellung erfolgte analog Beispiel 1 aus 1.9 g (1.89 mmol) 2-Methyl acrylsäure 6-{3(E)-[3-methoxy-4-(4-trans-pentylcyclohexylmethoxy)phenyl] acryloyloxy}hexylester und 3.1 g mg (0.02 mmol) 2,2'-Azo-bis-isobutyronitril (AIBN) und ergab 0.90 g Poly{1-[6-[3-[3-methoxy-4-(4-trans-pentylcyclohexylmethoxy) phenyl]acryloyloxy]hexyloxycarbonyl]-1-methylethylen}.

Der als Ausgangsmaterial verwendete 2-Methylacrylsäure 6-{3(E)-[3-methoxy-4-(4-trans-pentylcyclohexylmethoxy)phenyl]acryloyloxy}hexylester wurde nach folgendem Verfahren hergestellt:

### 4-Hydroxy-3-(E)-methoxyzimtsäure methylester

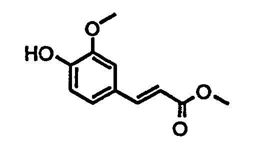

25 g (0.13 mol) (E)4-Hydroxy-3-methoxyzimtsäure wurden in 180 ml Methanol gelöst und mit 5 ml konzentrierter Schwefelsäure versetzt. Die Lösung wurde 2 Stunden unter Rückfluss erhitzt. Anschliessend wurde die Hauptmenge des Methanols (ca. 150 ml) abdestilliert und der verbleibende Rest auf 500 ml Eiswasser gegossen. Der ausgefallene Ester wurde abgenutscht, nacheinander mit kaltem Wasser, mit wenig kalter NaHCO3-lösung und wieder mit kaltem Wasser gewaschen und bei 50 °C im Wasserstrahlvakuum getrocknet. Chromatographie an 250 g Kieselgel mit Dichlormethan / Diethylether (19:1) ergab 21,78 g (E)-4-Hydroxy-3-methoxyzimtsäure methylester als hellgelbes Öl.

### 3(E)-[3-Methoxy-4-(4-trans-pentylcyclohexylmethoxy)phenyl]acrylsäure methylester

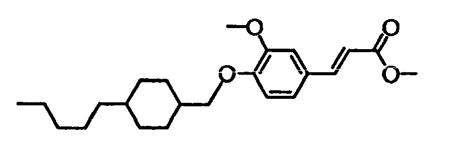

3.2 g (17.5 mmol) (4-trans-Pentylcyclohexyl)methanol und 4.0 g (19.2 mmol) 4-Hydroxy-3-methoxyzimtsäure methylester wurden in 90 ml Tetrahydrofuran gelöst. Zur erhaltenen klaren Lösung wurden, bei Raumtemperatur, 4.6 ml (18.4 mmol) Tributylphosphin und dann 4.6 g (18.4 mmol) 1,1-(Azodicarbonyl)-dipiperidin portionsweise zugegeben. Die gelbe Suspension wurde hierauf 15 Std. bei Raumtemperatur gerührt, dann zwischen Diethylether und Wasser verteilt, die organische Phase mehrmals mit ges. Natriumchloridlösung gewaschen, über Magnesiumsulfat getrocknet, filtriert und eingedampft. Chromatographie des Rückstandes an 200 g Kieselgel mit Toluol/Essigester 3:1 und Umkristallisation in einem Gemisch aus 40 ml Essigester und 80 ml Hexan ergab 4.6 g 3(E)-[3-Methoxy-4-(4-trans-pentylcyclohexylmethoxy)phenyl]acrylsäure methylester.

### 3(E)-[3-Methoxy-4-(4-trans-pentylcyclohexylmethoxy)phenyl]acrylsäure

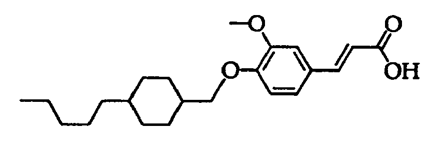

4.6 g (12.3 mmol) 3(E)-[3-Methoxy-4-(4-trans-pentylcyclohexylmethoxy) phenyl]acrylsäure methylester wurden in 150 ml 10 % iger Kaliumhydroxidlösung in Methanol suspendiert. Danach wurden 6 ml Wasser zugegeben und während 3 Std auf 70°C erhitzt. Dann wurde das Reaktionsgemisch abgekühlt, zwischen Diethylether und Wasser verteilt, die organische Phase mehrmals mit ges. Natriumchloridlösung gewaschen, die vereinigten wässrigen Phasen mit einer 25 % iger Salzsäurelösung auf pH=4 eingestellt und mehrmals mit Methylenchlorid extrahiert. Die Methylenchloridphasen wurden vereinigt, über Magnesiumsulfat getrocknet, filtriert und eingedampft. Dies ergab 3.8 g 3(E)-[3-Methoxy-4-(4-trans-pentylcyclohexylmethoxy)phenyl]acrylsäure

### 3(E)-[3-Methoxy-4-(4-trans-pentylcyclohexylmethoxy)phenyl]acrylsäure 6-hydroxyhexylester

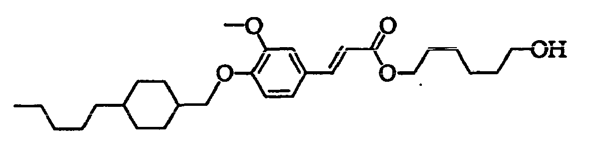

Die Darstellung erfolgte analog Beispiel 1 aus 1.95 g (5.41 mmol) 3(E)-[3-Methoxy-4-(4-trans-pentylcyclohexylmethoxy)phenyl]acrylsäure und 0.81 ml (6.11 mmol) 6-Chlor-1-hexanol und ergab, nach Chromatographie an 150 g Kieselgel mit Toluol/Essigester 3:1, 2.6 g 3(E)-[3-Methoxy-4-(4-trans-pentylcyclohexylmethoxy)phenyl]acrylsäure 6-hydroxyhexylester.

### 2-Methylacrylsäure 6-{3(E)-[3-methoxy-4-(4-trans-pentylcyclohexylmethoxy)phenyl]acryloyloxy}hexylester

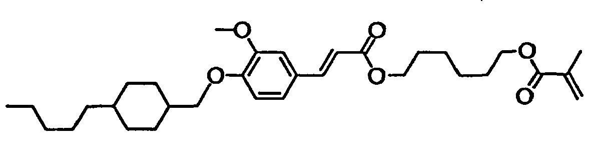

Zu ein Gemisch von 1.80 g (4.69 mmol) 3(E)-[3-Methoxy-4-(4-trans-pentylcyclohexylmethoxy)phenyl]acrylsäure 6-hydroxyhexylester, 0.40 ml (4.69 mmol) Methacrylsäure und 67 mg (0.55 mmol) 2,6-Dimethylaminopyridin wurden, bei 0°C, 1.13 g (5.47 mmol) Dicyclohexylcarbodiimid gegeben und während 15 Std. bei Raumtemperatur reagieren gelassen. Dann wurde das Reaktionsgemisch durch ein Kieselgelpolster filtriert und eingedampft. Chromatographie des Rückstandes an 150 g Kieselgel mit Hexan/Diethylether 3:1 ergab 1.9 g 2-Methylacrylsäure 6-{3(E)-[3-methoxy-4-(4-trans-pentylcyclohexylmethoxy)phenyl]acryloyloxy}hexylester.

In analoger Weise lassen sich folgende Polymere synthetisieren:
Siehe Formel I mit X=H, Y=H, D=O, w=1, w¹=0, w²=0.

| K | A | Z | B | Z¹ | 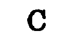 | S¹ | M¹ | λₘₐₓ. (CH₂Cl₂) |
|---|---|---|---|---|---|---|---|---|
| n-C₃H₇ | | | 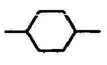 | CH₂O | 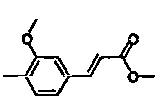 | (CH₂)₆ | 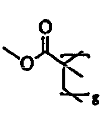 | |
| n-C₃H₇ | | | 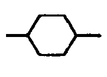 | CH₂O | 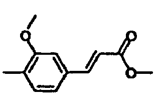 | (CH₂)₈ | 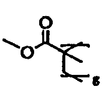 | |
| n-C₅H₁₁ | | | 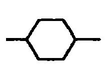 | CH₂O | 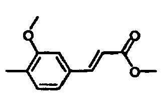 | (CH₂)₁₁ | 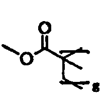 | |
| n-C₈H₁₇ | | | 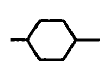 | CH₂O | 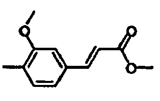 | (CH₂)₇ | 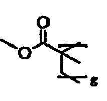 | |
| n-C₃H₇ | | | 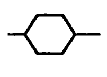 | (CH₂)₃O | 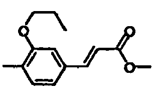 | (CH₂)₅ | 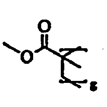 | |
| n-C₃H₇ | | | 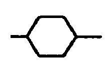 | (CH₂)₃O | 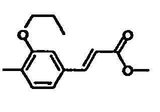 | (CH₂)₈ | 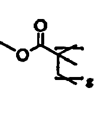 | |
| n-C₅H₁₁ | | | 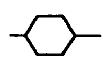 | (CH₂)₃O | 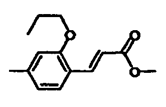 | (CH₂)₁₁ | 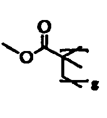 | |
| n-C₈H₁₇ | | | 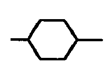 | (CH₂)₃O | 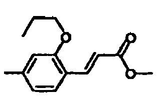 | (CH₂)₆ | 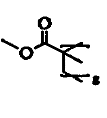 | |
| n-C₃H₇ | | | 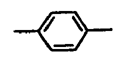 | CH₂O | 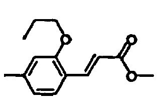 | (CH₂)₆ | 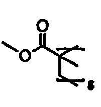 | |
| n-C₅H₁₁ | | | 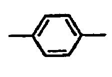 | CH₂O | 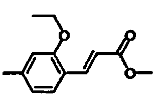 | (CH₂)₁₁ | 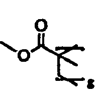 | |
| n-C₈H₁₇ | | | 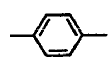 | CH₂O | 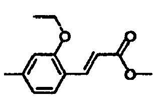 | (CH₂)₆ | 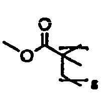 | |
| n-C₃H₇ | | | 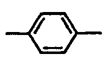 | (CH₂)₃O | 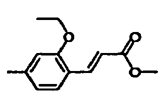 | (CH₂)₆ | 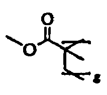 | |
| n-C₃H₇ | | | 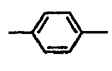 | (CH₂)₃O | 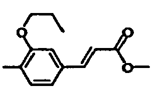 | (CH₂)₈ | 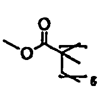 | |
| n-C₅H₁₁ | | | 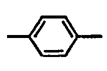 | (CH₂)₃O | 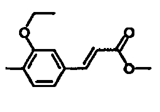 | (CH₂)₁₁ | 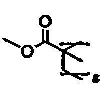 | |
| n-C₈H₁₇ | | | 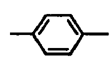 | (CH₂)₃O | 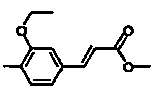 | (CH₂)₆ | 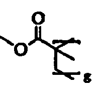 | |
| n-C₃H₇ | | | 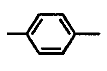 | COO | 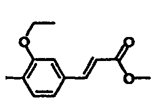 | (CH₂)₆ | 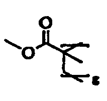 | |
| n-C₃H₇ | | | 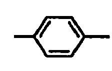 | COO | 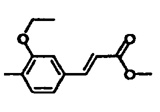 | (CH₂)₈ | 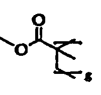 | |
| n-C₅H₁₁ | | | 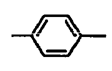 | COO | 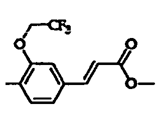 | (CH₂)₁₁ | 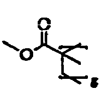 | |
| n-C₈H₁₇ | | | 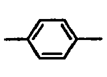 | COO | 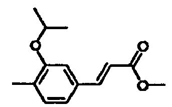 | (CH₂)₆ | 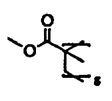 | |
| n-C₃H₇ | | | 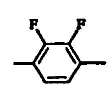 | COO | 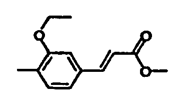 | (CH₂)₆ | 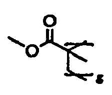 | |
| n-C₃H₇ | 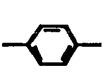 | | 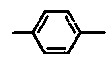 | COO | 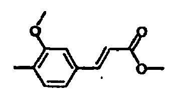 | (CH₂)₆ | 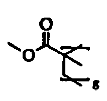 | |
| n-C₅H₁₁ | 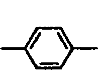 | | 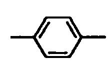 | CH₂O | 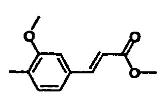 | (CH₂)₁₁ | 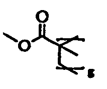 | |
| n-C₃H₇ | 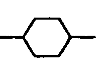 | | 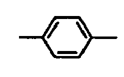 | COO | 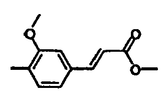 | (CH₂)₆ | 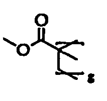 | |
| C₂H₅ | 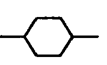 | | 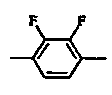 | COO | 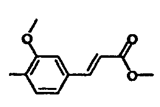 | (CH₂)₁₁ | 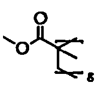 | |
| n-C₈H₁₇O | | | 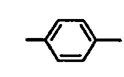 | COO | 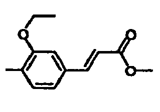 | (CH₂)₈ | 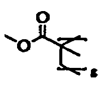 | |
| C₂H₅O | | | 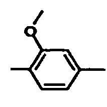 | COO | 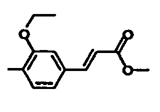 | (CH2)4 | 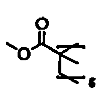 | |
| F | | | 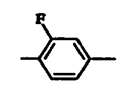 | COO | 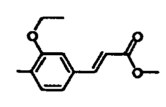 | (CH₂)₆ | 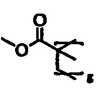 | |
| F | | | 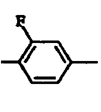 | COO | 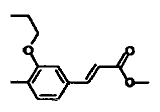 | (CH₂)₆ | 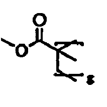 | |
| n-C₃H₇ | | | 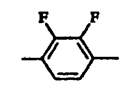 | COO | 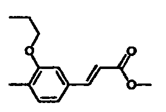 | (CH₂)₁₁ | 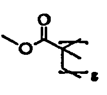 | |
| n-C₅H₁₁ | | | 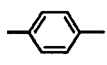 | COO | 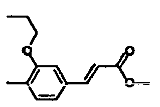 | (CH₂)₆ | 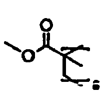 | |
| n-C₃H₇ | | | 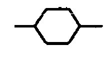 | CH₂O | 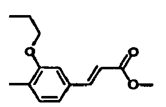 | (CH₂)₈ | 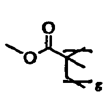 | |
| n-C₆H₁₃ | | | 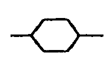 | CH₂O | 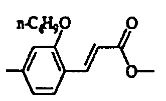 | (CH₂)₇ | 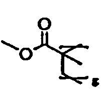 | |
| CH₃O | | | 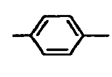 | COO | 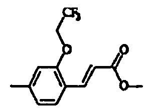 | (CH₂)₅ | 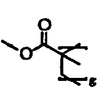 | |
| n-C₃H₇ | | | 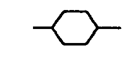 | CH₂O | 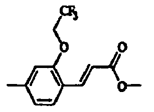 | (CH₂)₆ | 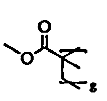 | |

### Beispiel 5

### Poly{1-[6-[3(E)-(2-ethoxy-4'-methoxybiphenyl-4-yl)acryloyloxy]hexyloxycarbonyl]-l-methytethylen}

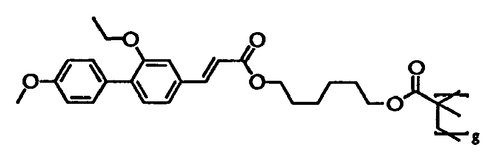

Die Darstellung erfolgt analog Beispiel 1 aus 1.0 g (2.14 mmol) 2-Methyl acrylsäure 6-{3(E)-[3(2-ethoxy-4'-methoxybiphenyl-4-yl)acryloyloxy}hexylester und 3.5 mg (0.02 mmol) 2,2'-Azo-bis-isobutyronitril (AIBN) und ergibt Poly{1-[6-[3(E)-(2-ethoxy-4'-methoxybiphenyl-4-yl)acryloyloxy]hexyloxycarbonyl]-1-methylethylen}.

Der als Ausgangsmaterial verwendete 2-Methyl acrylsäure 6-{3(E)-[3(2-ethoxy-4'-methoxybiphenyl-4-yl)acryloyloxy}hexylester wird nach folgendem Verfahren hergestellt:

### 3(E)-(3-Ethoxy-4-hydroxyphenyl)acrylsäure methylester

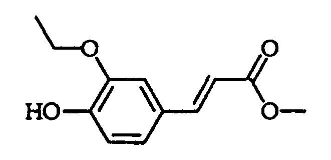

Zur eine Lösung von 1.0 g (6.01 mmol) 3-Ethoxy-4-hydroxybenzaldeyd und 10 ml Toluol werden 2.1 g (6.32 mmol) (Triphenylphosphoranylidene) acrylsäure methylester, bei Raumtemperatur, zugegeben. Dann wird während 1 Std. bei Raumtemperatur reagieren gelassen, die Reaktionssuspension wird über ein Kieselgel Polster klarfiltriert und das Filtrat eingedampft. Chromatographie des Rückstandes an Kieselgel mit Toluol/Essigester ergibt 3(E)-(3-Ethoxy-4-hydroxyphenyl)acrylsäure methylester.

### 3(E)-(3-Ethoxy-4-trifluormethansulfonyloxyphenyl)acrylsäure methylester

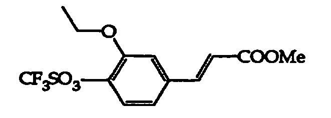

Zu einer Lösung bestehend aus 1.0 g (4.50 mmol) 3(E)-(3-Ethoxy-4-hydroxyphenyl)acrylsäure methylester und 10 ml Methylenchlorid werden 0.94 ml (6.75 mmol) Triethylamin gegeben und anschliessend das Reaktionsgemisch auf 0°C abgekühlt. Bei dieser Temperatur wird eine Lösung aus 1.11 ml (6.75 mmol) Trifluormethansulfonsäure-anhydrid und 5 ml Methylenchlorid innert 30 min. zugetropft. Danach wird die Reaktionssuspension zwischen Methylenchlorid und Wasser verteilt, die organische Phase mehrmals mit ges. Natriumchloridlösung gewaschen, über Magnesiumsulfat getrocknet, filtriert und eingedampft. Chromatographie des Rückstandes an Kieselgel ergibt 3(E)-(3-Ethoxy-4-trifluormethansulfonyloxyphenyl)acrylsäure methylester.

### 3(E)-(2-Ethoxy-4'-methoxybiphenyl-4-yl)acrylsäure methylester

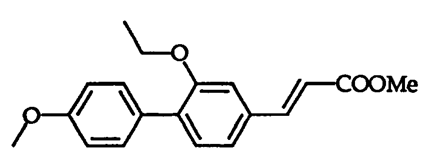

Ein Gemisch aus 1.0 g (2.82 mmol) 3(E)-(3-Ethoxy-4-trifluormethansulfonyloxyphenyl)acrylsäure methylester, 0.47 g (3.10 mmol) 4-Methoxyphenylboronsäure, 0.71 g (8.46 mmol) Natriumbicarbonat und 20 ml Dimethoxyethan wird dreimal mit Argon gespült, anschliessend 163 mg (0.14 mmol) Tetrakis(triphenylphosphin)palladium(0) zugegeben, und dann während 15 Std. bei 80°C nachreagieren gelassen. Danach wird das Reaktionsgemisch abgekühlt, zwischen Essigester und Wasser verteilt, die organische Phase mit Wasser gewaschen, über Magnesiumsulfat getrocknet, filtriert und eingedampft. Der Rückstand wird an 100 g Kieselgel mit Toluol/Essigester (3:1) chromatographiert. Dies ergibt 3(E)-(2-Ethoxy-4'-methoxybiphenyl-4-yl)acrylsäure methylester.

### 3(E)-(2-Ethoxy-4'-methoxybiphenyl-4-yl)acrylsäure

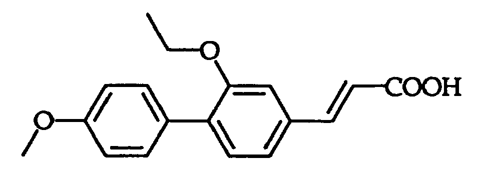

Die Darstellung erfolgt analog Beispiel 2 aus 1.0 g (3.2 mmol) 3(E)-(2-Ethoxy-4'-methoxybiphenyl-4-yl)acrylsäure methylester, 50 ml 10 % iger Kaliumhydroxid-lösung in Methanol und 2 ml Wasser und ergibt 3(E)-(2-Ethoxy-4'-methoxybiphenyl-4-yl)acrylsäure.

### 3(E)-(2-Ethoxy-4'-methoxybiphenyl-4-yl)acrylsäure 6-hydroxyhexylester

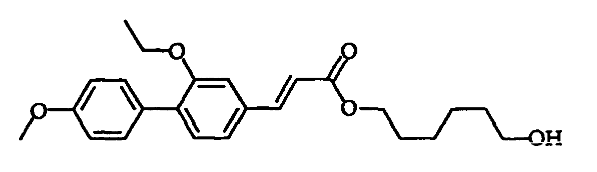

Die Darstellung erfolgt analog Beispiel 2 aus 1.0 g (3.35 mmol) 3(E)-(2-Ethoxy-4'-methoxybiphenyl-4-yl)acrylsäure, 0.49 g (3.68 mmol) 6-Chlor-1-hexanol und 0.55 g (3.68 mmol) 1,8-Diazabicyclo[5.4.0]undec-7-ene (1,5-5) und ergibt 3(E)-(2-Ethoxy-4'-methoxybiphenyl-4-yl)acrylsäure 6-hydroxyhexylester.

### 2-Methylacrylsäure 6-[3(E)-(2-Ethoxy-4'-methoxybiphenyl-4-yl)acryloyloxy]hexylester

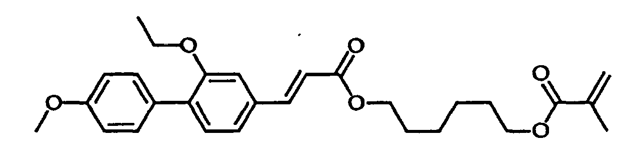

Die Darstellung erfolgt analog Beispiel 1 aus 1.0 g (2.14 mmol) 3(E)-(2-Ethoxy-4'-methoxybiphenyl-4-yl)acrylsäure 6-hydroxyhexylester, 0.31 ml (3.21 mmol) Methacrylsäure chlorid und 0.52 ml (3.75 mmol) Triethylamin und ergibt 2-Methylacrylsäure 6-[3(E)-(2-Ethoxy-4'-methoxybiphenyl-4-yl)acryloyloxy] hexylester.

In analoger Weise lassen sich folgende Polymere synthetisieren:
Siehe Formel I mit X=H, Y=H, D=O, w=1, w¹=0, w²=0.

| K | A | Z | B | C | S¹ | M¹ | λₘₐₓ. (CH₂Cl₂) |
|---|---|---|---|---|---|---|---|
| C₂H₅O | | | 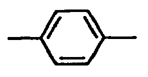 | 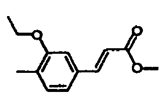 | (CH₂)₁₁ | 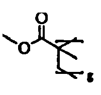 | |
| n-C₈H₁₇O | | | 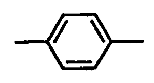 | 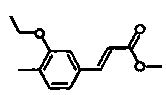 | (CH₂)₆ | 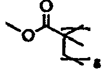 | |
| n-C₃H₇ | | | 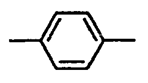 | 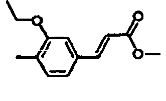 | (CH₂)₁₁ | 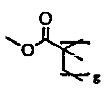 | |
| i-C₃H₇ | | | 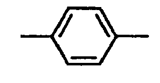 | 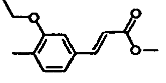 | (CH₂)₈ | 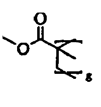 | |
| CN | | | 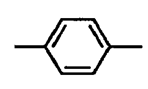 | 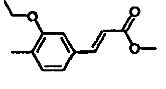 | (CH₂)₆ | 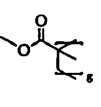 | |
| F | | | 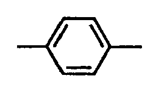 | 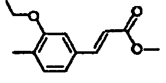 | (CH₂)₈ | 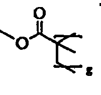 | |
| n-C₈H₁₇O | | | 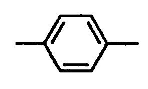 | 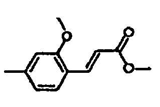 | (CH2)₅ | 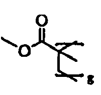 | |
| n-C₃H₇ | | | 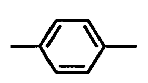 | 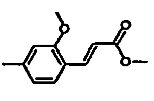 | (CH₂)₁₁ | 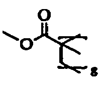 | |
| i-C₃H₇ | | | 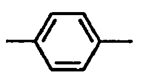 | 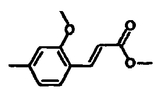 | (CH₂)₆ | 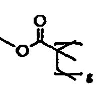 | |
| Cl | | | 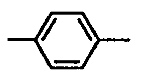 | 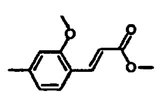 | (CH₂)₈ | 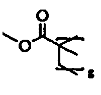 | |
| Cl | | | 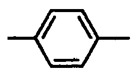 | 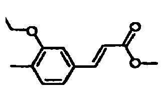 | (CH₂)₁₁ | 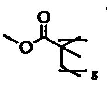 | |
| C₂H₅O | | | 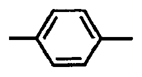 | 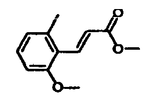 | (CH₂)₁₁ | 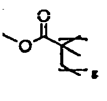 | |
| n-C₃H₇ | | | 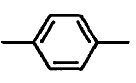 | 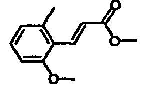 | (CH₂)₆ | 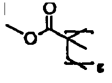 | |
| n-C₃H₇ | | | 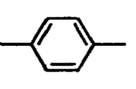 | 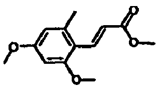 | (CH₂)₆ | 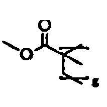 | |
| F | | | 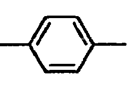 | 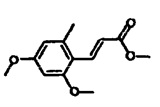 | (CH₂)₁₁ | 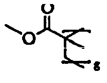 | |
| CH₃O | | | 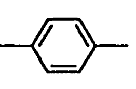 | 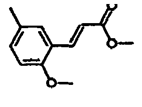 | (CH₂)₈ | 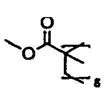 | |
| C₂H₅O | | | 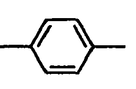 | 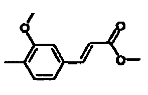 | (CH₂)₆ | 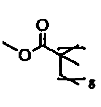 | |
| n-C₈H₁₇O | | | 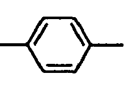 | 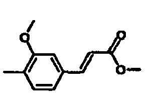 | (CH₂)₆ | 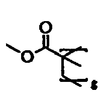 | |
| n-C₃H₇ | | | 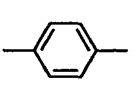 | 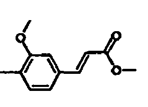 | (CH₂)₁₁ | 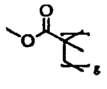 | |
| i-C₃H₇ | | | 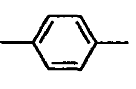 | 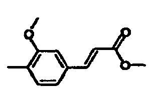 | (CH₂)₈ | 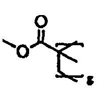 | |
| CN | | | 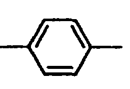 | 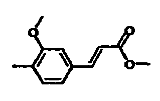 | (CH₂)₆ | 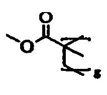 | |
| F | | | 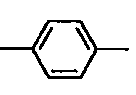 | 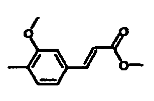 | (CH₂)₈ | 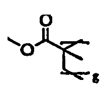 | |
| Cl | | | 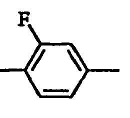 | 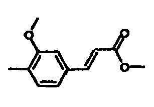 | (CH₂)₁₁ | 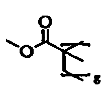 | |
| F | | | 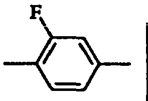 | 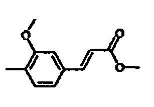 | (CH₂)₆ | 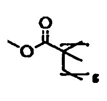 | |
| H | | | 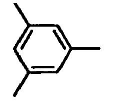 | 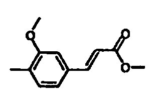 | (CH₂)₆ | 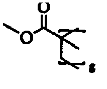 | |
| CH₃O | | | 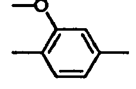 | 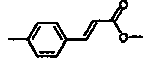 | (CH₂)₅ | 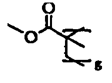 | |
| H | | | 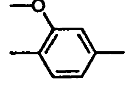 | 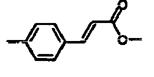 | (CH₂)₁₁ | 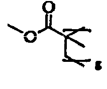 | |
| H | | | 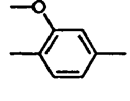 | 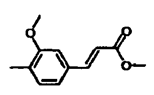 | (CH₂)₆ | 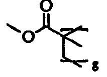 | |
| H | | | 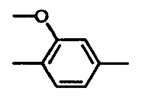 | 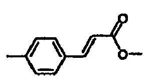 | (CH₂)₁₁ | 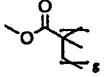 | |
| C₂H₅O | | | 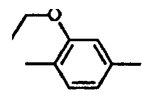 | 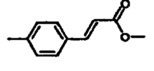 | (CH₂)₁₁ | 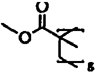 | |
| H | | | 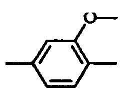 | 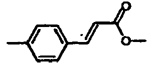 | (CH₂)₆ | 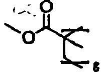 | |
| H | | | 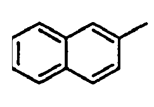 | 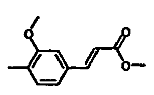 | (CH₂)₆ | 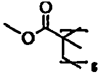 | |
| H | | | 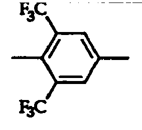 | 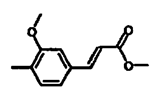 | (CH₂)₆ | 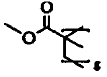 | |
| H | | | 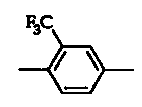 | 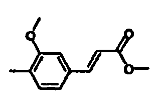 | (CH₂)₈ | 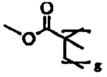 | |
| H | | | 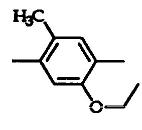 | 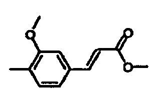 | (CH₂)₆ | 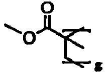 | |
| H | | | 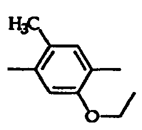 | 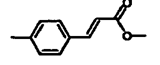 | (CH₂)₆ | 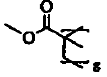 | |
| H | | | 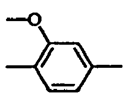 | 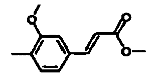 | (CH₂)₁₁ | 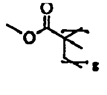 | |
| H | | | 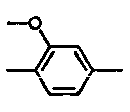 | 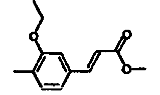 | (CH₂)₇ | 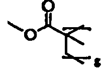 | |
| n-C₃H₇O | 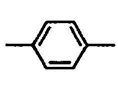 | | 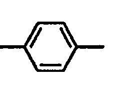 | 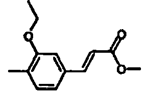 | (CH₂)₈ | 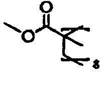 | |
| n-C₃H₇ | 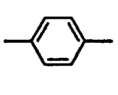 | | 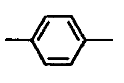 | 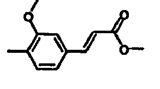 | (CH₂)₁₁ | 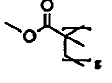 | |
| n-C₅H₁₁ | 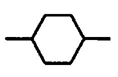 | | 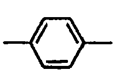 | 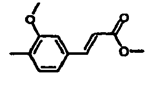 | (CH₂)₆ | 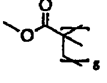 | |
| n-C₃H₇ | 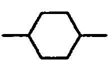 | (CH₂)₂ | 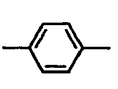 | 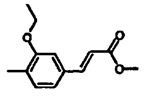 | (CH₂)₄ | 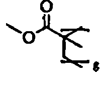 | |
| C₂H₄ | 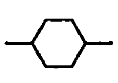 | | 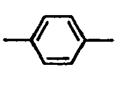 | 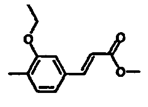 | (CH₂)₄ | 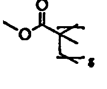 | |
| C₂H₅O | 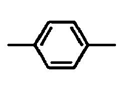 | | 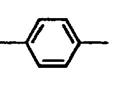 | 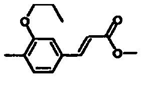 | (CH₂)₆ | 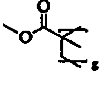 | |
| n-C₅H₁₁ | 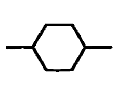 | | 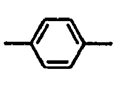 | 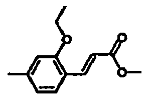 | (CH₂)₆ | 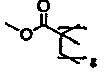 | |
| n-C₅H₁₁O | | | 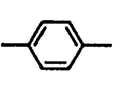 | 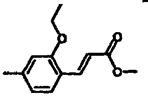 | (CH₂)₆ | 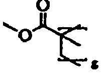 | |
| n-C₅H₁₁ | | | 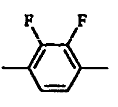 | 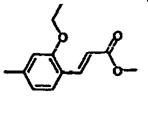 | (CH₂)₆ | 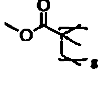 | |
| n-C₃H₇ | | | 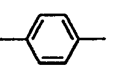 | 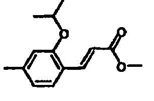 | (CH₂)₆ | 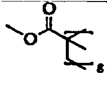 | |
| n-C₃H₇O | | | 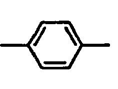 | 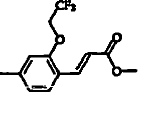 | (CH₂)₁₁ | 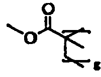 | |
| CF₃CH₂O | | | 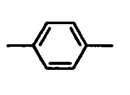 | 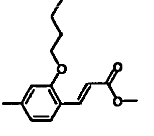 | (CH₂)₉ | 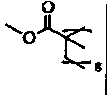 | |

### Beispiel 6

### Poly [1-[11-[3(E)-(3,4-Dimethoxyphenyl)acryloyloxy]undecyloxycarbonyl]-1-methylethylen]

### durch polymeranaloge Veretherung nach Mitsunobu

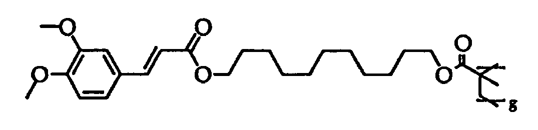

2,5 g (4,05 mmol) einer Stammlösung von Poly (2-hydroxy-ethyl methacrylat) (21 Gew. % in DMA) werden unter Argon mit 7,5 ml Dimethylacetamid (DMA) verdünnt. Unter Rühren werden bei Raumtemperatur 2,32 g (8,8 mmol) Triphenylphosphin und 3.62 g (8,1 mmol) 3-(4-Hydroxyphenyl) acrylsäure methylester im Reaktionsansatz gelöst und die Lösung wird auf 0 °C abgekühlt. Innerhalb von 4 Stunden werden dann 1,4 ml (8,8 mmol) Azodicarbonsäure-diäthylester (DEAD) zugetropft. Der Reaktionsansatz wird noch 15 Minuten bei 0 °C belassen und dann nach Entfernung des Eisbades 15 Stunden bei Raumtemperatur gerührt. Die Reaktionsmischung wird dann unter starkem Rühren in ca. 900 ml Diethylether getropft, das ausgefallene Polymer abfiltriert und bei 60 °C im Wasserstrahlvakuum getrocknet. Zur Reinigung wird der Rückstand in 10 ml Dichlormethan gelöst und erneut in Diethylether ausgefällt. Dieser Vorgang wird solange wiederholt, bis dünnschichtchromatographisch kein Monomer mehr nachweisbar ist. Filtrieren und Trocknen bei 60 °C im Vakuum ergeben Poly [1-[1 1-[3(E)-(3,4-dimethoxyphenyl)acryloyloxy]undecyloxycarbonyl]-1-methylethylen].

In analoger Weise lassen sich folgende Polymere synthetisieren:
Poly [1-[4-[3(E)-(3,4-nimethoxyphenyl)acryloyloxy]butyloxycarbonyl]-1-methylethylen]
Poly [1-[5-[3(E)-(3,4-dimethoxyphenyl)acryloyloxy]pentyloxycarbonyl]-1-methylethylen]
Poly [1-[6-[3(E)-(3,4-dimethoxyphenyl)acryloyloxy]hexyloxycarbonyl]-1-methylethylen]
Poly [1-[7-[3(E)-(3,4-dimethoxyphenyl)acryloyloxy]heptyloxycarbonyl]-1-methylethylen]
Poly [1-[8-[3(E)-(3,4-dimethoxyphenyl)acryloyloxy]octyloxycarbonyl]-1-methylethylen]
Poly [1-[9-[3(E)-(3,4-dimethoxyphenyl)acryloyloxy]nonyloxycarbonyl]-1-methylethylen]
Poly [1-[10-[3(E)-(3,4-dimethoxyphenyl)acryloyloxy]decyloxycarbonyl]-1-methylethylen]
Poly [1-[11-[3(E)-(3,4-dimethoxyphenyl)acryloyloxy]undecyloxycarbonyl]-1-methylethylen]
Poly [1-[12-[3(E)-(3,4-dimethoxyphenyl)acryloyloxy]dodecyloxycarbonyl]-1-methylethylen]
Poly [1-[5-[3(E)-(3,4-dimethoxyphenyl)acryloyloxy]pentyloxycarbonyl]-1-methylethylen-co-1-[6-[3(E)-3,4-dimethoxyphenyl)acryloyloxy]hexyloxycarbonyl]-1-methylethylen]
Poly [1-[7-[3(E)-(3,4-dimethoxyphenyl)acryloyloxy]heptyloxycarbonyl]-1-methylethylen-co-1-[8-[3(E)-3,4-dimethoxyphenyl)acryloyloxy]octyloxycarbonyl]-1-methylethylen]
Poly [1-[9-[3(E)-(3,4-diethoxyphenyl)acryloyloxy]nonyloxycarbonyl]-1-methylethylen-co-I-[6-[3(E)-3,4-dimethoxyphenyl)acryloyloxy]hexyloxycarbonyl]-1-methylethylen]
Poly [1-[10-[3(E)-(3,4-diethoxyphenyl)acryloyloxy]decyloxycarbonyl]-1-methylethylen-co-1-[6-[3(E)3,4-dimethoxyphenyl)acryloyloxy]hexyloxycarbonyl]-1-methylethylen]
Poly [1-[11-[3(E)-(3,4-diethoxyphenyl)acryloyloxy]undecyloxycarbonyl]-1-methylethylen-co-1-[7-[3(E)-3,4-dimethoxyphenyl)acryloyloxy]heptyloxycarbonyl]-1-methylethylen]
Poly [1-[8-[3(E)-(4-ethoxy-3-propoxyphenyl)acryloyloxy]octyloxycarbonyl]-1-methylethylen].
Poly [1-[9-[3(E)-(4-ethoxy3-propoxyphenyl)acryloyloxy]nonyloxycarbonyl]-1-methylethylen].
Poly [1-[11-[3(E)-(4-ethoxy-3-propoxyphenyl)acryloyloxy]undecyloxycarbonyl]-1-methylethylen].
Poly [1-[8-[3(E)-(4-ethoxy-3-propoxyphenyl)acryloyloxy]octyloxycarbonyl]-1-methylethylen-co-1-[8-[3(E)-3,4-dimethoxyphenyl)acryloyloxy]octyloxycarbonyl]-1-methylethylen]
Poly [1-[9-[3(E)-(4-ethoxy-3-propoxyphenyl)acryloyloxy]nonyloxycarbonyl]-1-methylethylen-co-1-[6-[3(E)-3,4-dimethoxyphenyl)acryloyloxy]hexyloxycarbonyl]-1-methylethylen]
Poly [1-[10-[3(E)-(4-ethoxy-3-propoxyphenyl)acryloyloxy]decyloxycarbonyl]-1-methylethylen-co-1-[10-[3(E)-3,4-Dimethoxyphenyl)acryloyloxy]decyloxycarbonyl]-1-methylethylen]
Poly{1-[6-[3-[3-methoxy-4-(4-trans-pentylcyclohexylmethoxy)phenyl]acryloyloxy]hexyloxycarbonyl]-1-methylethylen}
Poly{1-[11-[3-[3-methoxy-4-(4-trans-pentylcyclohexylinethoxy)phenyl]acryloyloxy]undecyloxycarbonyl]-1-methylethylen}
Poly{1-[6-[3-[3-methoxy-4-(4-trans-pentylcyclohexylmethoxy)phenyl]acryloyloxy]hexyloxycarbonyl]-1-methylethylen-co-1-10-[3(E)-(3,4-dimethoxyphenyl)acryloyloxy]decyloxycarbonyl]-1-methylethylen}
Poly{1-[11-[3-[3-methoxy-4-(4-trans-pentylcyclohexylmethoxy)phenyl]acryloyloxy]undecyloxycarbonyl]-1-methylethylen-co-1-[8-[3(E)-(4-ethoxy-3-propoxyphenyl)acryloyloxy]octyloxycarbonyl]-1-methylethylen}
Poly{1-[6-[3(E)-(2-ethoxy-4'-methoxybiphenyl-4-yl)acryloyloxy]hexyloxycarbonyl]-1-methylethylen}
Poly{1-[11-[3(E)-(2-ethoxy-4'-methoxybiphenyl-4-yl)acryloyloxy]undecyloxycarbonyl]-1-methylethylen}
Poly{1-[6-[3(E)-(2-ethoxy-4'-methoxybiphenyl-4-yl]acryloyloxy)hexyloxycarbonyl]-1-methylethylen-co-1-[11-[3(E)-(2-ethoxy-4'-methoxybiphenyl-4-yl)acryloyloxy]undecyloxycarbonyl]-1-methylethylen}
Poly{1-[6-[3(E)-(2-ethoxy-4'-methoxybiphenyl-4-yl)acryloyloxy]hexyloxycarbonyl]-1-methylethylen-co-1-[8-[3(E)-(4-,ethoxy-3-propoxyphenyl)acryloyloxy]octyloxycarbonyl]-1-methylethylen}

### Beispiel 7

### Poly [1-[6-[3(E)-(3-ethoxy-4-methoxyphenyl)acryloyloxy]hexyloxycarbonyl]-1-methylethylen-co-1-[2-ethylhexyloxycarbonyl]-1-methyl-ethylen]

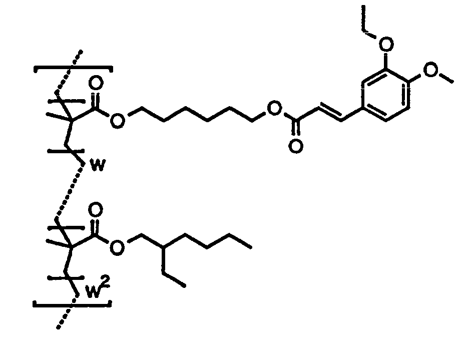

0.34 g (0.91 mmol) 2-Methylacrylsäure 6-[3(E)-(3-ethoxy-4-methoxyphenyl)acryloyloxy]hexylester, 0.01 g (0.05 mmol) Methacrylsäure-2-ethylhexylester (Fluka 64072) und 1.6 mg (0.0095 mmol) 2,2'-Azo-bis-isobutyronitril werden in 1.9 ml Tetrahydrofuran (THF) gelöst. Die Lösung wird 30 Minuten mit einem schwachen Argonstrom durchspült. Anschliessend wird das Reaktionsgefäss luftdicht verschlossen und während 15 Std.auf 55 °C erhitzt. Dann wird das Gefäss geöffnet, die Lösung mit 2 ml THF verdünnt und unter starkem Rühren bei Raumtemperatur in 0.9 l Diethylether getropft. Das ausgefallene Polymer wird abfiltriert und bei 50 °C im Wasserstrahlvakuum getrocknet. Zur weiteren Reinigung wird das Polymer in ca. 5 ml Dichlormethan gelöst und erneut in 0.9 1 Diethylether gefällt. Dieser Vorgang wird solange wiederholt, bis dünnschichtchromatographisch kein Monomer mehr nachweisbar ist. Filtrieren und Trocknen bei 50 °C im Wasserstrahlvakuum ergeben Poly [1-[6-[3(E)-(3-ethoxy-4-methoxyphenyl)acryloyloxy] hexyloxycarbonyl]-1-methyl-ethylen-co-1-[2-ethylhexyloxycarbonyl]-1-methyl-ethylen]

Der als Ausgangsmaterial verwendete 2-Methylacrylsäure 6-[3(E)-(3-ethoxy-4-methoxyphenyl)acryloyloxy]hexylester wird analog zum Poly [1-[8[3(E)-(4-ethoxy-3-propoxyphenyl)acryloyloxy]octyloxycarbonyl]-1-methylethylen] (Beispiel 3) hergestellt.

In analoger Weise lassen sich folgende Polymere synthetisieren:
Poly [1-[6-[3(E)-(3-ethoxy-4-methoxyphenyl)acryloyloxy]hexyloxycarbonyl]-1-methylethylen-co-1-[2-ethylhexyloxycarbonyl]-1-methylethylen] (9:1)
Poly [1-[6-[3(E)-(3-ethoxy-4-methoxyphenyl)acryloyloxy]hexyloxycarbonyl]-1-methylethylen-co-1-[2-ethylhexyloxycarbonyl]-1-methylethylen] (4:1);
Poly [1-[11-[3(E)-(3-ethoxy-4-methoxyphenyl)acryloyloxy]undecyloxycarbonyl]-1-methylethylen-co-1-[2-ethylhexyloxycarbonyl]-ethylen];
Poly [1-[8-[3(E)-(3-ethoxy-4-methoxyphenyl)acryloyloxy]octyloxycarbonyl]-1-methylethylen-co-1-hexyloxycarbonylethylen];
Poly [1-[6-[3(E)-(3-ethoxy-4-methoxyphenyl)acryloyloxy]hexyloxycarbonyl]-1-methylethylen-co-1-methoxycarbonyl-1-methylethylen];
Poly [1-[6-[3(E)-(3-ethoxy-4-methoxyphenyl)acryloyloxy]hexyloxycarbonyl]-1-methylethylen-co-1-ethoxycarbonyl-1-methylethylen];
Poly [1-[6-[3(E)-(3-ethoxy-4-methoxyphenyl)acryloyloxy]hexyloxycarbonyl]-1-methylethylen-co-1-propoxycarbonyl-1-methylethylen];
Poly [1-[6-[3(E)-(3-ethoxy-4-methoxyphenyl)acryloyloxy]hexyloxycarbonyl]-1-methylethylen-co-1-butyloxycarbonyl-1-methylethylen];
Poly [1-[6-[3(E)-(3-ethoxy-4-methoxyphenyl)acryloyloxy]hexyloxycarbonyl]-1-methylethylen-co-1-pentyloxycarbonyl-1-methylethylen];
Poly [1-[6-[3(E)-(3-ethoxy-4-methoxyphenyl)acryloyloxy]hexyloxycarbonyl]-1-methylethylen-co-1-hexyloxycarbonyl-1-methylethylen];
Poly [1-[6-[3(E)-(3-ethoxy-4-methoxyphenyl)acryloyloxy]hexyloxycarbonyl]-1-methylethylen-co-1-octyloxycarbonyl-1-methylethylen];
Poly [1-[6-[3(E)-(3-ethoxy-4-methoxyphenyl)acryloyloxy]hexyloxycarbonyl]-1-methylethylen-co-1-dodecyloxycarbonyl-1-methylethylen];
Poly [1-[6-[3(E)(3-ethoxy-4-methoxyphenyl)acryloyloxy]hexyloxycarbonyl]-1-methylethylen-co-1-octadecyloxycarbonyl-1-methylethylen];
Poly [1-[6-[3(E)-(3-ethoxy-4-methoxyphenyl)acryloyloxy]hexyloxycarbonyl]-1-methylethylen-co-1-allyloxycarbonyl-1-methylethylen];
Poly [1-[6-[3(E)-(3-ethoxy-4-methoxyphenyl)acryloyloxy]hexyloxycarbonyl]-1-methylethylen-co-1-phenylethylen];
Poly [1-[6-[3(E)-(3-ethoxy-4-methoxyphenyl)acryloyloxy]hexyloxycarbonyl]-1-methylethylen-co-1-methoxycarbonylethylen];
Poly [1-[6-[3(E)-(3-ethoxy-4-methoxyphenyl)acryloyloxy]hexyloxycarbonyl]-1-methylethylen-co-1-butyloxycarbonylethylen];
Poly [1-[6-[3(E)-(3-ethoxy-4-methoxyphenyl)acryloyloxy]hexyloxycarbonyl]-1-methylethylen-co-1-cyanoethylen];
Poly [1-[6-[3(E)-(2-ethoxy-4'-methoxybiphenyl-4-yl)acryloyloxy]hexyloxycarbonyl]-1-methylethylen-co-1-methoxycarbonyl-1-methylethylen];
Poly [1-[6-[3(E)-(2-ethoxy-4'-methoxybiphenyl-4-yl)acryloyloxy]hexyloxycarbonyl]-1-methylethylen-co-1-ethoxycarbonyl-1-methylethylen] (19:1);
Poly [1-[6-[3(E)-(2-ethoxy-4'-methoxybiphenyl-4-yl)acryloyloxy]hexyloxycarbonyl]-1-methylethylen-co-1-propoxycarbonyl-1-methylethylen];
Poly [1-[6-[3(E)-(2-propoxy-4'-ethoxybiphenyl-4-yl)acryloyloxy]hexyloxy-1-methylethylen-co-1-[2-methyl-propoxycarbonyl]-1-methylethylen];
Poly [1-[6-[3(E)-(2-propoxy-4 -ethoxybiphenyl-4-yl)acryloyloxy]hexyloxy-1-methylethylen-co-1-butyloxycarbonyl-1-methylethylen];
Poly [1-[6-[3(E)-(2-propoxy-4'-ethoxybiphenyl-4-yl)acryloyloxy]hexyloxy-1-methylethylen-co-1-pentyloxycarbonyl-1-methylethylen];
Poly [1-[6-[3(E)-(2-propoxy-4'-ethoxybiphenyl-4-yl)acryloyloxy]hexyloxy-1-methylethylen-co-1-hexyloxycarbonyl-1-methylethylen];
Poly [1-[6-[3(E)-(2-propoxy-4'-ethoxybiphenyl-4-yl)acryloyloxy]hexyloxy-1-methylethylen-co-1-[2-ethylhexyloxyearbonyl-1-methylethylen] (20:1);
Poly [1-[6-[3(E)-(2-ethoxy-4'-methoxybiphenyl-4-yl)acryloyloxy]hexyloxycarbonyl]-1-methylethylen-co-1-octyloxycarbonyl-1-methylethylen];
Poly [1-[6[3(E)-(2-ethoxy-4'-methoxybiphenyl-4-yl)acryloyloxy]hexyloxycarbonyl]-1-methylethylen-co-1-undecyloxycarbonyl-1-methylethylen];
Poly [1-[6-[3-[3-methoxy-4-(4-trans-pentylcyclohexylmethoxy)phenyl]acryloyloxy]hexyloxycarbonyl]-1-methylethylen-co-1-dodecyloxycarbonyl-1-methylethylen];
Poly [1-[8-[3-[3-methoxy-4-(4-trans-pentylcyclohexylmethoxy)phenyl]acryloyloxy]octyloxycarbonyl]-1-methylethylen-co-1-octadecyloxycarbonyl-1-methylethylen];
Poly [1-[6-[3-[3-methoxy-4-(4-trans-pentylcyclohexylmethoxy)phenyl] acryloyloxy]hexyloxycarbonyl]-1-methylethylen-co-1-allyloxycarbonyl-1-methylethylen];
Poly [1-[6-[3-[3-methoxy-4-(4-trans-pentylcyclohexylmethoxy)phenyl] acryloyloxy]hexyloxycarbonyl]-1-methylethylen-co-1-[2-phenoxyethoxycarbonyl]-1-methylethylen];
Poly [1-[6-[3-[3-methoxy-4-(4-trans-pentylcyclohexyl methoxy) phenyl]acryloyloxy]hexyloxycarbonyl]-1-methylethylen-co-1-[2-phenylethoxycarbonyl]-1-methylethylen];
Poly [1-[6[3(E)-(2-ethoxy-4'-methoxybiphenyl-4-yl)acryloyloxy]hexyloxycarbonyl]-1-methylethylen-co-1-phenylethylen];
Poly [1-[6[3(E)-(2-ethoxy-4'-methoxybiphenyl-4-yl)acryloyloxy]hexyloxycarbonyl]-1-methylethylen-co-1-cyanoethylen].

## Patentansprüche

1. Polymere der allgemeinen Formel I: 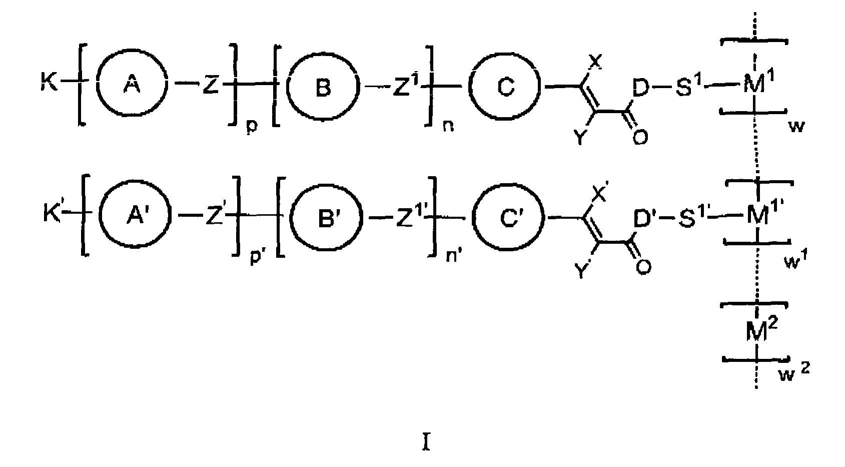 worin,
M¹,M^{1'} eine wiederkehrende Monomereinheit aus der Gruppe: Acrylat, Methacrylat, 2-Chloracrylat, 2-Phenylacrylat; gegebenenfalls durch C₁₋₆ Alkyl N-substituiertes Acrylamid, Methacrylamid, 2-Chloracrylamid und 2-Phenylacrylamid; Vinylether, Vinylester, Styrol-Derivate, Siloxane;
M² eine wiederkehrende Monomereinheit aus der Gruppe: Acrylat, Methacrylat, 2-Chloracrylat, 2-Phenylacrylat, gegebenenfalls durch C₁₋₆ Alkyl N-substituiertes Acrylamid, Methacrylamid, 2-Chloracrylamid und 2-Phenylacrylamid; Vinylether, Vinylester; geradkettige oder verzweigte Alkylester der Acryl- bzw. Methacrylsäure, Allylester der Acryl- bzw. Methacrylsäure, Alkylvinylether bzw. Ester, Phenoxyalkylacrylate bzw. Phenoxyalkylmethacrylate oder Hydroxyalkylacrylate bzw. Hydroxyalkylmethacrylate, Phenylalkylacrylate bzw. Phenylalkylmethacrylate, wobei die Alkylreste 1 bis 20, vorzugsweise 5 bis 20, insbesondere jedoch 5 bis 18 Kohlenstoffatome haben; Acrylnitril, Methacrylnitril, Styrol, 4-Methylstyrol oder Siloxane bedeutet;
w, w¹, w² Molenbrüche der Comonomeren mit 0<w≤1, 0≤w¹<1 und 0≤w²≤0,5 sind;
S¹, S^{1'} unabhängig voneinander 1,4-Butylen, 1,5-Pentylen, 1,6-Hexylen, 1,7-Heptylen, 1,8-Octylen, 1,9-Nonylen, 1,10-Decylen, 1,11-Undecylen, 1,12-Dodecylen, 1,3-Butylen, 3-Methyl-1,3-butylen, 3-Propylenoxy-6-hexylen, 3-Propylencarbamoyloxy-6-hexylen, 3-Propylencarbonyloxy-6-hexylen, 3-Propylenoxycarbonyl-6-hexylen, 3-Propylencarbonylanxino-6-hexylen, Propylencarbamoylhexylen darstellen;
D, D' unabhängig voneinander -O- oder -NR²-;
wobei R² Wasserstoff oder C₁₋₆ Alkyl bedeuten;
X,X',Y,Y' unabhängig voneinander Wasserstoff, Fluor, Chlor, Cyano, gegebenenfalls mit Fluor substituiertes Alkyl mit 1 bis 12 Kohlenstoffatomen in der gegebenenfalls eine CH₂ Gruppe oder mehrere nicht benachbarte CH₂ Gruppen durch O, -COO-,-OOC-, und/oder -CH=CH- ersetzt sein können;
A, A' unabhängig voneinander unsubstituiertes oder gegebenenfalls mit Fluor, Chlor, Cyano, Alkyl, Alkoxy oder Fluoralkoxy substituiertes Phenylen, Pyridin-2,5-diyl, Pyrimidin-2,5-diyl, 1,3-Dioxan-2,5-diyl, Cyclohexan-1,4-diyl, Piperidin-1,4-diyl, Piperazin-1,4-diyl;
B, B' unabhängig voneinander unsubstituiertes oder gegebenenfalls mit Fluor, Chlor, Cyano, Alkyl, Alkoxy oder Fluoralkoxy substituiertes Phenylen, Pyridin-2,5-diyl, Pyrimidin-2,5-diyl, 1,4- bzw. 2,6-Naphthylen, 1,3-Dioxan-2,5-diyl, Cyclohexan-1,4-diyl;
C, C' unabhängig voneinander unsubstituiertes oder gegebenenfalls mit Fluor, Chlor, Cyano, Alkyl, Alkoxy oder Fluoralkoxy substituiertes Phenylen, oder Pyrimidin-2,5-diyl, Pyridin-2,5-diyl, 2,5-Thiophenylen, 2,5-Furanylen, 1,4- oder 2,6-Naphthylen;
K, K' unabhängig voneinander Wasserstoff, Fluor, Chlor, Cyano, Nitro oder eine gegebenenfalls mit Fluor, Chlor, Cyano oder Nitro substituierte geradkettige oder verzweigte Alkyl-, Alkoxy- Alkyl-COO-, Alkyl-CO-NR³ oder Alkyl-OCO-Gruppe mit 1 bis 20 Kohlenstoffatomen in der gegebenenfalls eine CH₂ Gruppe oder mehrere nicht benachbarte CH₂ Gruppen durch-O-, -CH=CH- oder -C≡C- ersetzt sein können und worin R³ Wasserstoff oder C₁₋₆ Alkyl;
mit der Massgabe, dass mindestens einer der Ringe A, B, C und/oder mindestens einer der Ringe A', B', C' einen Phenylenrest darstellt, welcher mit mindestens einer Alkoxy-Gruppe oder Fluoralkoxy-Gruppe ortho oder meta zu einer der Verknüpfungsstellen substituiert ist, wobei falls K Alkoxy oder Fluoralkoxy bedeutet, ein weiterer Alkoxy- oder Fluoralkoxy-Substituent vorhanden ist, der sich am selben Phenylenreste befindet wie der Rest K;
Z, Z', Z¹, Z^{1'} unabhängig voneinander eine einfache Kovalenzbindung, -(CH₂)ₜ-, -O-, -CO-, -CO-O-, -O-OC-, -NR⁴-, -CO-NR⁴-, -R⁴N-CO-, -(CH₂)ᵤ-O-, -O-(CH₂)ᵤ-, -(CH₂)ᵤ-NR⁴- oder -NR⁴-(CH₂)ᵤ-; wobei R⁴ Wasserstoff oder C₁₋₆ Alkyl bedeuten,
t eine ganze Zahl von 1 bis 4;
u eine ganze Zahl von 1 bis 3;
p,p',n,n' unabhängig voneinander 0 oder 1
bedeuten.

2. Polymere nach Anspruch 1, worin M¹, M², S¹, K, die in Anspruch 1 angegebene Bedeutung haben und worin
D Sauerstoff;
X,Y Wasserstoff;
w 0<w<1;
w¹ 0;
w² 0< w² < 0.5;
P 0;
n 0 oder 1;
Z¹ eine einfache Kovalenzbindung, -CH₂CH₂-, -O-, -CH₂-O-, -O-CH₂-, -CO-O- oder -O-OC-;
C unsubstituiertes oder mit Alkoxy oder Fluoralkoxy substituiertes Phenylen, Pyridin-2,5-diyl oder Pyrimidin-2,5-diyl;
B unsubstituiertes oder mit Alkoxy oder Fluoralkoxy substituiertes Phenylen Pyridin-2,5-diyl, Pyrimidin-2,5-diyl, Cyclohexan1,4-diyl oder Dioxan-1,5-diyl;
mit der Massgabe, dass mindestens einer der Ringe B oder C einen Phenylenrest darstellt, welcher mit mindestens einer Alkoxy-Gruppe oder Fluoralkoxy-Gruppe ortho oder meta zu einer der Verknüpfungsstellen substituiert ist, wobei falls K Alkoxy oder Fluoralkoxy bedeutet, mindestens einer der Ringe B oder C einen Phenylenrest darstellt, welcher mit mindestens einer weiteren Alkoxy-Gruppe oder Fluoralkoxy-Gruppe substituiert ist;
bedeuten.

3. Polymere nach Anspruch 2, worin M¹, S¹, D, X, Y, K, Z¹, B, C, n und p die in Anspruch 2 angegebene Bedeutung haben und worin
w 1;
w¹ 0;
w² 0;
bedeuten.

4. Polymere nach Anspruch 2, worin M¹,M², S¹, D, X, Y, K, Z¹, n, p, w, w¹ und w² die in Anspruch 2 angegebene Bedeutung haben und worin
B unsubstituiertes oder mit Alkoxy oder Fluoralkoxy substituiertes Phenylen, oder Cyclohexan-1,4-diyl;
C unsubstituiertes oder mit Alkoxy oder Fluoralkoxy substituiertes Phenylen, mit der Massgabe, dass einer der vorhandenen Phenylenreste mit mindestens einer Alkoxy-Gruppe oder Fluoralkoxy-Gruppe substituiert ist, wobei falls K Alkoxy oder Fluoralkoxy bedeutet, mindestens einer der vorhandenen Phenylenreste mit mindestens einer weiteren Alkoxy-Gruppe oder Fluoralkoxy-Gruppe substituiert ist;
bedeuten.

5. Polymere nach Anspruch 4, worin M¹, S¹, D, X, Y, K, Z¹, B, C, n und p die in Anspruch 4 angegebene Bedeutung haben und worin
w 1;
w¹ 0;
w² 0;
bedeuten.

6. Polymere nach einem der Ansprüche 1-5,
Poly [1-[6-[3(E)-(3,4-Dimethoxyphenyl)acryloyloxy]hexyloxycaxbonyl]-1--methylethylen];
Poly [1-[11-[3(E)-(3,4-Diethoxyphenyl)acryloyloxy]undecyloxycarbonyl]-1-methylethylen];
Poly [1-[11-[3(E)-(3,4-Dimethoxyphenyl)acryloyloxy]undecyloxycarbonyl]-1-methylethylen];
Poly [1-[8-[3(E)-(4-ethoxy-3-propoxyphenyl)acryloyloxy]octyloxycarbonyl]-1-methylethylen];
Poly [1-[6-[3-[3-methoxy-4-(4-trans-pentylcyclohexylmethoxy)phenyl]-acryloyloxy]hexyloxycarbonyl]-1-methylethylen];
Poly [1-[6-[3(E)-(2-ethoxy-4'-methoxybiphenyl-4-yl)acryloyloxy]-hexyloxycarbonyl]-1-methylethylen].

7. Verwendung von photovernetzbaren Polymeren gemäss einem der Ansprüche 1 bis 6 zur Herstellung von Orientierungsschichten für Flüssigkristalle, sowie deren Verwendung in optischen Bauelementen, insbesondere zur Herstellung von Hybridscbächtelementen.

## Claims

1. Polymers of the general formula I: 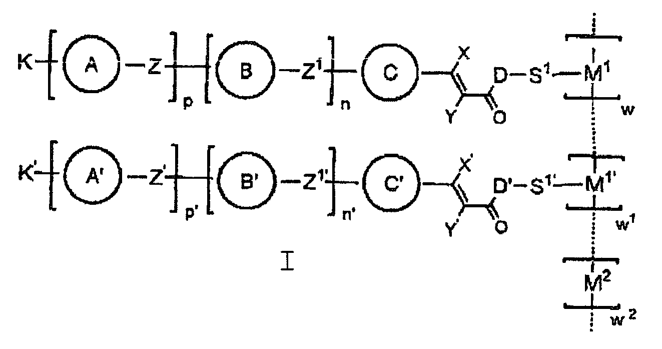 wherein
M¹, M^{1'} are a recurring monomer unit from the group: acrylate, methacrylate, 2-chloroacrylate, 2-phenylacrylate; acrylamide, methacrylamide, 2-chloroacrylamide and 2-phenylacrylamide, optionally N-substituted by C₁₋₆-alkyl; vinyl ethers, vinyl esters, styrene derivatives, siloxanes;
M² is a recurring monomer unit from the group: acrylate, methacrylate, 2-chloroacrylate, 2-phenylacrylate; acrylamide, methacrylamide, 2-chloroacrylamide and 2-phenylacrylamide, optionally N-substituted by C₁₋₆-alkyl; vinyl ethers, vinyl esters; straight-chain or branched alkyl esters of acrylic or methacrylic acid, allyl esters of acrylic or methacrylic acid, alkylvinyl ethers or esters, phenoxyalkyl acrylates or phenoxyalkyl methacrylates or hydroxyalkyl acrylates or hydroxyalkyl methacrylates, phenylalkyl acrylates or phenylalkyl methacrylates, where the alkyl radicals have from 1 to 20, preferably 5 to 20, in particular 5 to 18 carbon atoms; acrylonitrile, methacrylonitrile, styrene, 4-methylstyrene or siloxanes;
w, w¹, w² are molar fractions of the comonomers wherein 0<w≤1, 0≤w¹<1 and 0≤w²≤0.5;
S¹,S^{1'} are independently of one another 1,4-butylene, 1,5-pentylene, 1,6-hexylene, 1,7-heptylene, 1,8-octylene, 1,9-nonylene, 1,10-decylene, 1,11-undecylene, 1,12-dodecylene, 1,3-butylene, 3-methyl-1,3-butylene, 3-propyleneoxy-6-hexylene, 3-propylenecarbamoyloxy-6-hexylene, 3-propylenecarbonyloxy-6-hexylene, 3-propyleneoxycarbonyl-6-hexylene, 3-propylenecarbonylamino-6-hexylene, propylenecarbamoylhexylene;
D, D' are independently of one another -O- or -NR²-; where R² is hydrogen or C₁₋₆-alkyl;
X,X',Y,Y' are independently of one another hydrogen, fluorine, chlorine, cyano, alkyl having 1 to 12 carbon atoms which is optionally substituted by fluorine and in which one CH₂ group or more non-adjacent CH₂ groups may optionally be replaced by 0, -COO-, -OOC- and/or -CH=CH-;
A, A' are independently of one another phenylene, unsubstituted or optionally substituted by fluorine, chlorine, cyano, alkyl, alkoxy or fluoroalkoxy, pyridine-2,5-diyl, pyrimidine-2,5-diyl, 1,3-dioxane-2,5-diyl, cyclohexane-1,4-diyl, piperidine-1,4-diyl, piperazine-1,4-diyl;
B, B' are independently of one another phenylene, unsubstituted or optionally substituted by fluorine, chlorine, cyano, alkyl, alkoxy or fluoroalkoxy, pyridine-2,5-diyl, pyrimidine-2,5-diyl, 1,4- or 2,6-naphthylene, 1,3-dioxane-2,5-diyl, cyclohexane-1,4-diyl;
C, C' are independently of one another phenylene, unsubstituted or optionally substituted by fluorine, chlorine, cyano, alkyl, alkoxy or fluoroalkoxy, or pyrimidine-2,5-diyl, pyridine-2,5-diyl, 2,5-thiophenylene, 2,5-furanylene, 1,4- or 2,6-naphthylene;
K, K' are independently of one another hydrogen, fluorine, chlorine, cyano, nitro or a straight-chain or branched alkyl, alkoxy, alkyl-C0O alkyl-CO-NR³ or alkyl-OCO group having 1 to 20 carbon atoms which is optionally substituted by fluorine, chlorine, cyano or nitro and in which one CH₂ group or more non-adjacent CH₂ groups may optionally be replaced by -O-, -CH=CH- or -C≡C-, and wherein R³ is hydrogen or C₁₋₆-alkyl;
with the proviso that at least one of the rings A, B, C and/or at least one of the rings A', B', C' represents a phenylene radical which is substituted by at least one alkoxy group or fluoroalkoxy group in ortho or meta position to one of the points of linkage, where, if K is alkoxy or fluoroalkoxy, a further alkoxy or fluoroalkoxy substituent is present which is located at the same phenylene radical as the radical K;
Z,Z',Z¹,Z^{1'} are independently of one another a single covalent bond, -(CH₂)ₜ-, -O-, -CO-, -CO-O-, -O-OC-, -NR⁴-, -CO-NR⁴-, -R⁴N-CO-, -(CH₂)ᵤ-O-, -O-(CH₂)ᵤ-, -(CH₂)ᵤ-NR⁴- or -NR⁴-(CH₂)ᵤ-; where R⁴ is hydrogen or C₁₋₆-alkyl;
t is an integer from 1 to 4;
u is an integer from 1 to 3;
p,p',n,n' are independently of one another 0 or 1.

2. Polymers according to Claim 1, wherein M¹, M², S¹, K are as defined in Claim 1 and wherein
D is oxygen;
X, Y are hydrogen;
w is 0<w<1;
w¹ is 0;
w² is 0<w²<0.5;
p is 0;
n is 0 or 1;
Z¹ is a single covalent bond, -CH₂CH₂-, -O-, -CH₂-O-, -O-CH₂-, -CO-O- or -O-OC-;
C is phenylene, unsubstituted or substituted by alkoxy or fluoroalkoxy, pyridine-2,5-diyl or pyrimidine-2,5-diyl;
B is phenylene, unsubstituted or substituted by alkoxy or fluoroalkoxy, pyridine-2,5-diyl, pyrimidine-2,5-diyl, cyclohexane-1,4-diyl or dioxane-1,5-diyl;
with the proviso that at least one of the rings B or C represents a phenylene radical which is substituted by at least one alkoxy group or fluoroalkoxy group in ortho or meta position to one of the positions of linkage, where, if K is alkoxy or fluoroalkoxy, at least one of the rings B or C represents a phenylene radical which is substituted by at least one further alkoxy group or fluoroalkoxy group.

3. Polymers according to Claim 2, wherein M¹, S¹, D, X, Y, K, Z¹, B, C, n and p are as defined in Claim 2 and wherein
w is 1;
w¹ is 0;
w² is 0.

4. Polymers according to Claim 2, wherein M¹, M², S¹, D, X, Y, K, Z¹, n, p, w, w¹ and w² are as defined in Claim 2 and wherein
B is phenylene, unsubstituted or substituted by alkoxy or fluoroalkoxy, or cyclohexane-1,4-diyl;
C is phenylene, unsubstituted or substituted by alkoxy or fluoroalkoxy, with the proviso that one of the phenylene radicals present is substituted by at least one alkoxy group or fluoroalkoxy group, where, if K is alkoxy or fluoroalkoxy, at least one of the phenylene radicals present is substituted by at least one further alkoxy group or fluoroalkoxy group.

5. Polymers according to Claim 4, wherein M¹, S¹, D, X, Y, K, Z¹, B, C, n and p are as defined in Claim 4 and wherein
w is 1;
w¹ is 0;
w² is 0.

6. Polymers according to one of Claims 1-5,
poly[1-[6-[3(E)-(3,4-dimethoxyphenyl)acryloyloxy]-hexyloxycarbonyl]-1-methylethylene];
poly[1-[11-[3(E)-(3,4-diethoxyphenyl)acryloyloxy]-undecyloxycarbonyl]-1-methylethylene];
poly[1-[11-[3(E)-(3,4-dimethoxyphenyl)acryloyloxy]-undecyloxycarbonyl]-1-methylethylene];
poly[1-[8-[3(E)-(4-ethoxy-3-propoxyphenyl)acryloyloxy]-octyloxycarbonyl]-1-methylethylene];
poly[1-[6-[3-[3-methoxy-4-(4-trans-pentylcyclohexylmethoxy)phenyl]acryloyloxy]hexyloxycarbonyl]-1-methylethylene];
poly[1-[6-[3(E)-(2-ethoxy-4'-methoxybiphenyl-4-yl)acryloyloxy]hexyloxycarbonyl]-1-methylethylene].

7. Use of photocrosslinkable polymers according to one of Claims 1 to 6 for the preparation of alignment layers for liquid crystals, and their use in optical components, in particular for the preparation of hybrid layer elements.

## Revendications

1. Polymères de formule générale I : 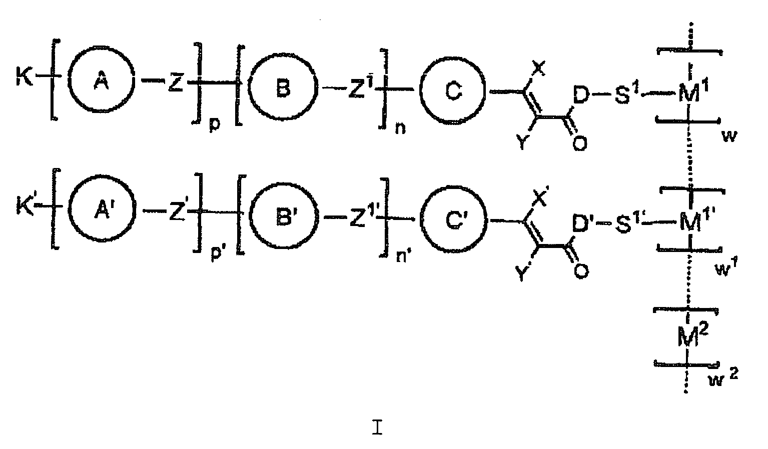 dans laquelle
M¹, M^{1'} représentent un motif monomère répétitif choisi dans l'ensemble :
acrylate, méthacrylate, 2-chloracrylate, 2-phénylacrylate ;
acrylamide, méthacrylamide, 2-chloracrylamide et 2-phénylacrylamide, éventuellement substitués sur l'atome d'azote par alkyle en C₁-C₆ ;
éther vinylique, ester vinylique, dérivés de styrène, siloxanes ;
M² représente un motif monomère répétitif choisi dans l'ensemble :
acrylate, méthacrylate, 2-chloracrylate, 2-phénylacrylate ; acrylamide, méthacrylamide, 2-chloracrylamide et 2-phénylacrylamide, éventuellement substitués sur l'atome d'azote par alkyle en C₁-C₆ ; éther vinylique, ester vinylique, esters alkyliques à chaîne droite ou ramifiée de l'acide acrylique ou méthacrylique, ester allylique de l'acide acrylique ou méthacrylique, éthers ou esters alkylvinyliques, acrylates de phénoxyalkyle ou méthacrylates de phénoxyalkyle ou acrylates d'hydroxyalkyle ou méthacrylates d'hydroxyalkyle, acrylates de phénylalkyle ou méthacrylates de phénylalkyle, les radicaux alkyle ayant de 1 à 20, de préférence de 5 à 20, mais en particulier de 5 à 18 atomes de carbone ; acrylonitrile, méthacrylonitrile, styrène, 4-méthylstyrène ou siloxanes ;
w, w¹, w² sont les fractions molaires des comonomères, où 0<w≤1, 0≤w¹<1 et 0≤w²≤0,5 ;
S¹, S^{1'} représentent, indépendamment l'un de l'autre, un groupe 1,4-butylène, 1,5-pentylène, 1,6-hexylène, 1,7-heptylène, 1,8-octylène, 1,9-nonylène, 1,10-décylène, 1,11-undécylène, 1,12-dodécylène, 1,3-butylène, 3-méthyl-1,3-butylène, 3-propylène-oxy-6-hexylène, 3-propylène-carbamoyloxy-6-hexylène, 3-propylène-carbonyloxy-6-hexylène, 3-propylène-oxycarbonyl-6-hexylène, 3-propylène-carbonylamino-6-hexylène, propylène-carbamoylhexylène ;
D, D' représentent, indépendamment l'un de l'autre, -O- ou -NR²- ;
_{R}² représentant un atome d'hydrogène ou un groupe alkyle en C₁-C₆ ;
X, X', Y, Y' représentent, indépendamment les uns des autres, un atome d'hydrogène, de fluor ou de chlore, ou un groupe cyano, un groupe alkyle ayant de 1 à 12 atomes de carbone, éventuellement substitué par le fluor, dans lequel un groupe CH₂ ou plusieurs groupes CH₂ non contigus peuvent éventuellement être remplacés par -O-, -COO-, -OOC- et/ou -CH=CH- ;
A, A' représentent, indépendamment l'un de l'autre, un groupe phénylène non substitué ou éventuellement substitué par le fluor ou le chlore ou par cyano, alkyle, alcoxy ou fluoroalcoxy, un groupe pyridine-2,5-diyle, pyrimidine-2,5-diyle, 1,3-dioxanne-2,5-diyle, cyclohexane-1,4-diyle, pipéridine-1,4-diyle, pipérazine-1,4-diyle ;
B, B' représentent, indépendamment l'un de l'autre, un groupe phénylène non substitué ou éventuellement substitué par le fluor ou le chlore ou par cyano, alkyle, alcoxy ou fluoroalcoxy, un groupe pyridine-2,5-diyle, pyrimidine-2,5-diyle, 1,4- ou 2,6-naphtylène, 1,3-dioxanne-2,5-diyle, cyclohexane-1,4-diyle ;
C, C' représentent, indépendamment l'un de l'autre, un groupe phénylène non substitué ou éventuellement substitué par le fluor ou le chlore ou par cyano, alkyle, alcoxy ou fluoroalcoxy, ou un groupe pyrimidine-2,5-diyle, pyridine-2,5-diyle, 2,5-thio-phénylène, 2,5-furannylène, 1,4- ou 2,6-naphtylène ;
K, K' représentent, indépendamment l'un de l'autre, un atome d'hydrogène, de fluor ou de chlore, ou un groupe cyano, nitro, ou un groupe alkyle, alcoxy, alkyl-COO, alkyl-CO-NR³ ou alkyl-OCO ayant de 1 à 20 atomes de carbone, à chaîne droite ou ramifiée, éventuellement substitué par le fluor ou le chlore ou par cyano ou nitro, dans lequel un groupe CH₂ ou plusieurs groupes CH₂ non contigus peuvent éventuellement être remplacés par -O-, -CH=CH- ou -C≡C- et dans lequel R³ représente un atome d'hydrogène ou un groupe alkyle en C₁-C₆ ;
étant entendu qu'au moins l'un des cycles A, B, C et/ou au moins l'un des cycles A', B', C' représente un radical phénylène qui est substitué par au moins un groupe alcoxy ou un groupe fluoroalcoxy en position ortho ou méta par rapport à l'une des positions de liaison, et où lorsque K représente un groupe alcoxy ou fluoroalcoxy, un autre substituant alcoxy ou fluoroalcoxy qui se trouve sur le même radical phénylène que le radical K est présent ;
Z, Z', Z¹, Z^{1'} représentent, indépendamment les uns des autres, une simple liaison covalente, -(CH₂)ₜ, -O-, -CO-, -CO-O-, -O-OC-, -NR⁴-, -CO-NR⁴-, -R⁴N-CO-, -(CH₂)ᵤ-O-, -O-(CH₂)ᵤ-, -(CH₂)ᵤ-NR⁴- ou -NR⁴-(CH₂)ᵤ- ; R⁴ représentant un atome d'hydrogène ou un groupe alkyle en C₁-C₄,
t représente un nombre entier allant de 1 à 4 ;
u représente un nombre entier allant de 1 à 3 ;
p, p', n, n' représentent, indépendamment les uns des autres, 0 ou 1.

2. Polymères selon la revendication 1, dans lesquels M¹, M², S¹, K ont les significations indiquées dans la revendication 1 et dans lesquels
D représente un atome d'hydrogène ;
X, Y représentent un atome d'hydrogène ;
w est 0<w<1 ;
w¹ est 0 ;
w² est 0<w²<0,5 ;
p est 0 ;
n est 0 ou 1 ;
Z¹ représente une simple liaison covalente, -CH₂CH₂-, -O-, -CH₂-O-, -O-CH₂-, -CO-O- ou -O-OC- ;
C représente un groupe phénylène non substitué ou substitué par alcoxy ou fluoroalcoxy, pyridine-2,5-diyle ou pyrimidine-2,5-diyle ;
B représente un groupe phénylène non substitué ou substitué par alcoxy ou fluoroalcoxy, un groupe pyridine-2,5-diyle, pyrimidine-2,5-diyle, cyclohexane-1,4-diyle ou dioxanne-1,5-diyle ;
étant entendu qu'au moins l'un des cycles B ou C représente un radical phénylène qui est substitué par au moins un groupe alcoxy ou un groupe fluoroalcoxy en position ortho ou méta par rapport à l'une des positions de liaison, et où lorsque K représente un groupe alcoxy ou fluoroalcoxy, au moins l'un des cycles B ou C représente un radical phénylène qui est substitué par au moins un autre groupe alcoxy ou groupe fluoroalcoxy.

3. Polymères selon la revendication 2, dans lesquels M¹, S¹, D, X, Y, K, Z¹, B, C, n et p ont les significations indiquées dans la revendication 2 et dans lesquels
w est 1 ;
w¹ est 0 ;
w² est 0.

4. Polymères selon la revendication 2, dans lesquels M¹, M², S¹, D, X, Y, K, Z¹, n, p, w, w¹ et w² ont les significations indiquées dans la revendication 2 et dans lesquels
B représente un groupe phénylène non substitué ou éventuellement substitué par alcoxy ou fluoroalcoxy, ou un groupe cyclohexane-1,4-diyle ;
C représente un groupe phénylène non substitué ou substitué par alcoxy ou fluoroalcoxy ;
étant entendu qu'au moins l'un des radicaux phénylène présents est substitué par au moins un groupe alcoxy ou un groupe fluoroalcoxy, et lorsque K représente un groupe alcoxy ou fluoroalcoxy, au moins l'un des radicaux phénylène présents est substitué par au moins un autre groupe alcoxy ou groupe fluoroalcoxy.

5. Polymères selon la revendication 4, dans lesquels M¹, S¹, D, X, Y, K, Z¹, B, C, n et p ont les significations indiquées dans la revendication 4 et dans lesquels
w est 1 ;
w¹ est 0 ;
w² est 0.

6. Polymères selon l'une quelconque des revendications 1 à 5,
poly[1-[6-[3(E)-(3,4-diméthoxyphényl)acryloyloxy]-hexyloxycarbonyl]-1-méthyléthylène];
poly[1-[11-[3(E)-(3,4-diéthoxyphényl)acryloyloxy]-undécyloxycarbonyl]-1-méthyléthylène] ;
poly[1-[11-[3(E)-(3,4-diméthoxyphényl)-acryloyloxy]undécyloxycarbonyl]-1-méthyléthylène] ;
poly[1-[8-[3(E)-(4-éthoxy-3-propoxyphényl)-acryloyloxy]octyloxycarbonyl]-1-méthyléthylène] ;
poly[1-[6-[3-[3-méthoxy-4-(4-trans-pentylcyclohexylméthoxy)phényl]acryloyloxy]hexyloxycarbonyl]-1-méthyléthylène] ;
poly[1-[6-[3(E)-(2-éthoxy-4'-méthoxybiphényl-4-yl)acryloyloxy]hexyloxycarbonyl]-1-méthyléthylène].

7. Utilisation des polymères photoréticulables selon l'une quelconque des revendications 1 à 6, pour la production de couches d'orientation pour cristaux liquides, ainsi que leur utilisation dans des composants optiques, en particulier pour la fabrication d'éléments à couches hybrides.
